# EUROPEAN PATENT APPLICATION

(11) **EP 4 848 823 A1**
(43) Date of publication of application: **02.12.2026**
(21) Application number: 25754485.8
(22) Date of filing: 13.01.2025
(51) Int. Cl.: H04W 40/22

(54) **RELAY CONNECTION ESTABLISHMENT METHOD AND APPARATUS**

(30) Priority: 15.02.2024 CN 202410180844
(71) Applicant: Huawei Technologies Co., Ltd., Shenzhen, Guangdong 518129 (CN)
(72) Inventor: ZHANG, Chenyu, Shenzhen Guangdong 518129 (CN); XU, Shengfeng, Shenzhen Guangdong 518129 (CN)
(74) Representative: Körber, Martin Hans
(86) International application number: PCT/CN2025/072056
(87) International publication number: WO 2025/171758

(57) **Abstract**

Embodiments of this application provide a relay link establishment method and an apparatus. The method includes: receiving first information, where the first information includes a discovery response message sent by each of a plurality of relay terminals, the discovery response message is a response message to a first discovery message, the discovery response message includes first indication information and first discovery information, the first indication information indicates relay terminals through which the first discovery information passes, the first discovery information includes a terminal identifier and a relay service code, and the first discovery message is used by a first terminal to discover a second terminal; determining a first relay terminal based on the first information, where the first relay terminal is one of the plurality of relay terminals; and sending a link message to the first relay terminal, where the link message includes the terminal identifier and second indication information, and the second indication information is the first indication information in the discovery response message sent by the first relay terminal. This application improves the quality of relay communication.

## Description

This application claims priority to Chinese Patent Application No. 202410180844.2, filed with the China National Intellectual Property Administration on February 15, 2024 and entitled "RELAY LINK ESTABLISHMENT METHOD AND APPARATUS", which is incorporated herein by reference in its entirety.

### TECHNICAL FIELD

This application relates to communication technologies, and in particular, to a relay link establishment method and an apparatus.

### BACKGROUND

With the development of communication technologies, proximity services allow user equipments (User Equipments, UEs) to directly communicate with each other, enabling a UE without wireless network coverage to communicate via another UE or access a network via another UE. UEs are linked to each other through a proximity communication 5 (Proximity Communication 5, PC5) interface, and may perform direct PC5 communication after mutual discovery. However, when two end UEs (End UEs) that need to perform terminal-to-terminal (UE-to-UE, U2U) PC5 communication cannot establish a direct PC5 link, one or more intermediate UEs may be used as relays to forward communication signals or data for the two UEs, thereby enabling the two UEs to indirectly establish a PC5 link. Similarly, when a remote UE (Remote UE) that needs to perform terminal-to-network (UE-to-Network, U2N) communication cannot establish a direct air interface (Uu interface) link, one or more intermediate UEs may be used as relays to forward communication signals or data for the remote UE, thereby enabling the UE to indirectly access the network.

In conventional technologies, a first relay terminal is selected mainly based on signal quality or a time to live TTL value of a discovery signal or a discovery response signal, and a relay link is further established with reference to a layer-2 address association relationship of a relay address.

However, in the conventional technologies, during the process of selecting the first relay terminal based on the signal quality or the time to live TTL value, a relay terminal on a link path to the communication target cannot be accurately selected. Moreover, using the time to live value to avoid loops incurs high overhead, further deteriorating the quality of relay communication.

### SUMMARY

This application provides a relay link establishment method and an apparatus to address the problem of poor quality of relay communication.

According to a first aspect, this application provides a relay link establishment method, including: receiving first information, where the first information includes a discovery response message sent by each of a plurality of relay terminals, the discovery response message is a response message to a first discovery message, the discovery response message includes first indication information and first discovery information, the first indication information indicates relay terminals through which the first discovery information passes, the first discovery information includes a terminal identifier and a relay service code, and the first discovery message is used by a first terminal to discover a second terminal; determining a first relay terminal based on the first information, where the first relay terminal is one of the plurality of relay terminals; and sending a link message to the first relay terminal, where the link message includes the terminal identifier and second indication information, and the second indication information is the first indication information in the discovery response message sent by the first relay terminal.

In this application, the first information including the discovery response message sent by each of the plurality of relay terminals is received, to determine the first relay terminal, and the link message is further sent to the first relay terminal, to establish a relay link between the first terminal and the second terminal. The discovery response message in the first information includes an indication of the relay terminals through which the first discovery information passes. Therefore, in a process of determining the first relay terminal based on the first information, a discovery response message in which first indication information indicates the smallest number of relay terminals through which the first discovery information passes may be selected, and a relay terminal that sends the discovery response message is determined as the first relay terminal, to improve relay link efficiency and further save radio resources for relay communication.

In a possible implementation, the determining the first relay terminal based on the first information includes: determining the first relay terminal based on the first indication information in the first information.

In a possible implementation, the discovery response message further includes a time to live value; and/or the first information further includes signal quality of the discovery response message, where the time to live value is a value of a time to live of the first discovery message when the first discovery message corresponding to the discovery response message is responded to.

In a possible implementation, the determining the first relay terminal based on the first information includes: determining the first relay terminal based on the first indication information and one or more of the time to live value in the first information, the signal quality of the discovery response message, and preset third indication information, where the preset third indication information indicates a relay terminal that the first terminal expects to select.

In a possible implementation, the method further includes: broadcasting the first discovery message, where the first discovery message includes the first discovery information, first hop count information, and the first indication information, the first hop count information is used to limit a maximum number of hops for transmission of the first discovery information, and the first indication information indicates the relay terminals through which the first discovery information passes.

In a possible implementation, the method further includes: receiving a link response message sent by the first relay terminal, where the link response message is a response message to the link message.

In a possible implementation, the terminal identifier includes an identifier of the first terminal and an identifier of the second terminal, or the terminal identifier includes an identifier of the first terminal.

According to a second aspect, this application provides a relay link establishment method, including: receiving second information, where the second information includes a second discovery message broadcast by each of a plurality of relay terminals, the second discovery message is used by a first terminal to discover a second terminal, the second discovery message is from the relay terminal, the second discovery message includes fourth indication information and second discovery information, the fourth indication information indicates relay terminals through which the second discovery information passes, the second discovery information includes a terminal identifier and a relay service code, and the second discovery information is from the second terminal; determining a first relay terminal based on the second information, where the first relay terminal is one of the plurality of relay terminals; and sending a link message to the first relay terminal, where the link message includes the terminal identifier and fifth indication information, and the fifth indication information is the fourth indication information in the second discovery message sent by the first relay terminal.

In this application, the second information including the second discovery message sent by each of the plurality of relay terminals is received, to determine the first relay terminal, and the link message is further sent to the first relay terminal, to establish a relay link between the first terminal and the second terminal. The second discovery message in the second information includes an indication of the relay terminals through which the second discovery information passes. Therefore, in a process of determining the first relay terminal based on the second information, a second discovery message in which fourth indication information indicates the smallest number of relay terminals through which the second discovery information passes may be selected, and a relay terminal that sends the second discovery message is determined as the first relay terminal, to improve relay link efficiency and further save radio resources for relay communication.

In a possible implementation, the determining the first relay terminal based on the second information includes: determining the first relay terminal based on the fourth indication information in the second information.

In a possible implementation, the second discovery message further includes second hop count information; and/or the second information further includes signal quality of the second discovery message, where the second hop count information is used to limit a maximum number of hops for transmission of the second discovery information.

In a possible implementation, the determining the first relay terminal based on the second information includes: determining the first relay terminal based on the fourth indication information and one or more of the second hop count information in the second information, the signal quality of the second discovery message, and preset third indication information, where the preset third indication information indicates a relay terminal that the first terminal expects to select.

In a possible implementation, the method further includes: receiving a link response message sent by the first relay terminal, where the link response message is a response message to the link message.

In a possible implementation, the terminal identifier includes an identifier of the first terminal and an identifier of the second terminal, or the terminal identifier includes an identifier of the first terminal.

According to a third aspect, this application provides a relay link establishment method, including: receiving a link message sent by a first terminal or another relay terminal, where the link message includes a terminal identifier and second indication information, the second indication information is first indication information in a discovery response message sent by a first relay terminal, the first relay terminal is a relay terminal determined based on first information, and the first information is information that is received by the first terminal and that includes a discovery response message sent by each of a plurality of relay terminals; and determining, based on the second indication information, another relay terminal or a second terminal to which the link message is to be sent, and sending the link message to the another relay terminal or the second terminal.

In this application, the link message sent by the first terminal or another relay terminal is received. The another relay terminal or the second terminal to which the link message is to be sent is determined based on the second indication information, and the link message is sent to the another relay terminal or the second terminal. A to-be-sent first discovery message is determined based on a number of relay terminals indicated by the first indication information, so that radio resources for relay link establishment and relay communication can be saved.

In a possible implementation, the determining, based on the second indication information, the another relay terminal or the second terminal to which the link message is to be sent, and sending the link message to the another relay terminal or the second terminal includes: if determining, based on the second indication information, that the link message is to be sent to the another relay terminal, unicasting the link message to the another relay terminal; and if determining, based on the second indication information, that the link message is to be sent to the second terminal, sending the link message to the second terminal based on a type of the second terminal, where the type of the second terminal includes a relay device and a terminal device.

In a possible implementation, the sending the link message to the second terminal based on the type of the second terminal includes: if the type of the second terminal is the relay device, unicasting the link message to the second terminal; and if the type of the second terminal is the terminal device, broadcasting the link message.

In a possible implementation, the method further includes: receiving a discovery response message sent by the second terminal or another relay terminal, where the discovery response message is a response message to a first discovery message, the discovery response message includes first indication information and first discovery information, the first indication information indicates relay terminals through which the first discovery information passes, the first discovery information includes the terminal identifier and a relay service code, and the first discovery message is used by the first terminal to discover the second terminal; and sending the discovery response message to corresponding another relay terminal or the first terminal based on a layer-2 address association relationship.

In a possible implementation, the method further includes: receiving third information, where the third information includes a first discovery message broadcast by the first terminal or another relay terminal, the first discovery message includes first discovery information, first hop count information, and first indication information, the first hop count information is used to limit a maximum number of hops for transmission of the first discovery information, and the first indication information indicates relay terminals through which the first discovery information passes; and determining and broadcasting a to-be-sent first discovery message based on the third information.

In a possible implementation, the third information further includes signal quality of the first discovery message; and determining and broadcasting the to-be-sent first discovery message based on the third information includes: determining and broadcasting the to-be-sent first discovery message based on the first indication information and one or more of the first hop count information and the signal quality of the first discovery message.

In a possible implementation, the method further includes: receiving a link response message sent by the second terminal or another relay terminal, where the link response message is a response message to the link message, and the link response message includes the terminal identifier and an identifier of the relay terminal sending the link response message; and sending the link response message to the first terminal or the another relay terminal based on the terminal identifier in the link response message and an identifier of the relay terminal receiving the link response message.

In a possible implementation, the terminal identifier includes an identifier of the first terminal and an identifier of the second terminal, or the terminal identifier includes an identifier of the first terminal.

According to a fourth aspect, this application provides a relay link establishment method, including: receiving a link message sent by a first terminal or another relay terminal, where the link message includes a terminal identifier and fifth indication information, and the fifth indication information is fourth indication information in a second discovery message sent by a first relay terminal; and determining, based on the fifth indication information, another relay terminal or a second terminal to which the link message is to be sent, and sending the link message to the another relay terminal or the second terminal.

In this application, the link message sent by the first terminal or another relay terminal is received. The another relay terminal or the second terminal to which the link message is to be sent is determined based on the fifth indication information, and the link message is sent to the another relay terminal or the second terminal. By determining the relay terminal or the second terminal to which the link message is to be sent based on the fifth indication information in the link message, accuracy of relay link establishment is improved, signaling overhead in the link establishment process is reduced, and quality of relay communication is further enhanced.

In a possible implementation, the determining, based on the fifth indication information, the another relay terminal or the second terminal to which the link message is to be sent, and sending the link message to the another relay terminal or the second terminal includes: if determining, based on the fifth indication information, that the link message is to be sent to the another relay terminal, unicasting the link message to the another relay terminal; and if determining, based on the fifth indication information, that the link message is to be sent to the second terminal, sending the link message to the second terminal based on a type of the second terminal, where the type of the second terminal includes a relay device and a terminal device.

In a possible implementation, the sending the link message to the second terminal based on the type of the second terminal includes: if the type of the second terminal is the relay device, unicasting the link message to the second terminal; and if the type of the second terminal is the terminal device, broadcasting the link message.

In a possible implementation, the method further includes: generating and broadcasting a second discovery message, where the second discovery message is used by the first terminal to discover the second terminal, the second discovery message includes fourth indication information and second discovery information, the fourth indication information indicates relay terminals through which the second discovery information passes, the second discovery information includes the terminal identifier and a relay service code, and the second discovery information is from the second terminal.

In a possible implementation, the method further includes: receiving fourth information, where the fourth information includes a second discovery message broadcast by each of a plurality of other relay terminals; and determining and broadcasting a to-be-sent second discovery message based on the fourth information.

In a possible implementation, the determining and broadcasting the to-be-sent second discovery message based on the fourth information includes: determining and broadcasting the to-be-sent second discovery message based on fourth indication information.

In a possible implementation, the second discovery message further includes second hop count information; and/or the fourth information further includes signal quality of the second discovery message, where the second hop count information is used to limit a maximum number of hops for transmission of the second discovery information; and the determining and broadcasting the to-be-sent second discovery message based on the fourth information includes: determining and broadcasting the to-be-sent second discovery message based on the fourth indication information and one or more of the second hop count information in the fourth information and the signal quality of the second discovery message.

In a possible implementation, the method further includes: receiving a link response message sent by the second terminal or another relay terminal, where the link response message is a response message to the link message, and the link response message includes the terminal identifier and an identifier of the relay terminal sending the link response message; and sending the link response message to the first terminal or another relay terminal based on the terminal identifier in the link response message and the identifier of the relay terminal sending the link response message.

In a possible implementation, the terminal identifier includes an identifier of the first terminal and an identifier of the second terminal, or the terminal identifier includes an identifier of the first terminal.

According to a fifth aspect, this application provides a relay link establishment method, including: receiving a link message sent by a relay terminal, where the link message includes a terminal identifier and second indication information, the second indication information is first indication information in a discovery response message sent by a first relay terminal, the first relay terminal is a relay terminal determined based on first information, and the first information is information that is received by a first terminal and that includes a discovery response message sent by each of a plurality of relay terminals; generating, based on the terminal identifier and the second indication information that are included in the link message, a link response message corresponding to the link message, and determining the relay terminal corresponding to the link response message; and sending the link response message to the relay terminal corresponding to the link response message.

In this application, the link message sent by the relay terminal is received, the link response message corresponding to the link message is generated based on the terminal identifier and the second indication information that are included in the link message, the relay terminal corresponding to the link response message is determined, and the link response message is sent to the relay terminal corresponding to the link response message. By determining the terminal to which the link response message is to be sent based on the second indication information in the link message, accuracy of relay link establishment is improved, signaling overhead in the link establishment process is reduced, and quality of relay communication is further enhanced.

In a possible implementation, the link response message includes the terminal identifier, an identifier of a second terminal or a relay terminal that sends the link response message, and an identifier of a relay terminal or the first terminal that receives the link response message.

In a possible implementation, the method further includes: receiving fifth information, where the fifth information includes a first discovery message broadcast by each of a plurality of relay terminals, the first discovery message includes first discovery information, first hop count information, and first indication information, the first hop count information is used to limit a maximum number of hops for transmission of the first discovery information, and the first indication information indicates relay terminals through which the first discovery information passes; determining, based on the fifth information, a first discovery message to be responded to; generating a discovery response message to the first discovery message to be responded to, where the discovery response message includes first indication information and the first discovery information, the first indication information indicates relay terminals through which the first discovery information passes, and the first discovery information includes the terminal identifier and a relay service code; and sending the discovery response message to a corresponding relay terminal based on a layer-2 address association relationship.

In a possible implementation, the determining, based on the fifth information, the first discovery message to be responded to includes: determining, based on the first hop count information and/or the first indication information, the first discovery message to be responded to.

In a possible implementation, the fifth information further includes signal quality of the first discovery message.

In a possible implementation, the determining, based on the fifth information, the first discovery message to be responded to includes: determining, based on the first indication information and one or more of the first hop count information, the signal quality of the first discovery message, and preset sixth indication information, the first discovery message to be responded to, where the preset sixth indication information indicates a relay terminal that the second terminal expects to select.

In a possible implementation, the terminal identifier includes the identifier of the first terminal and the identifier of the second terminal, or the terminal identifier includes the identifier of the first terminal.

According to a sixth aspect, this application provides a relay link establishment method, including: receiving a link message sent by a relay terminal, where the link message includes a terminal identifier and fifth indication information, the fifth indication information is fourth indication information in a second discovery message sent by a first relay terminal, the first relay terminal is a relay terminal determined based on second information, and the second information is information that is received by a first terminal and that includes a second discovery message sent by each of a plurality of relay terminals; generating, based on the terminal identifier and the fifth indication information that are included in the link message, a link response message corresponding to the link message, and determining the relay terminal corresponding to the link response message; and sending the link response message to the relay terminal corresponding to the link response message.

In this application, the link message sent by the relay terminal is received, the link response message corresponding to the link message is generated based on the terminal identifier and the fifth indication information that are included in the link message, the relay terminal corresponding to the link response message is determined, and the link response message is sent to the relay terminal corresponding to the link response message. By determining the terminal to which the link response message is to be sent based on the fifth indication information in the link message, accuracy of relay link establishment is improved, signaling overhead in the link establishment process is reduced, and quality of relay communication is further enhanced.

In a possible implementation, the link response message includes the terminal identifier, an identifier of a second terminal or a relay terminal that sends the link response message, and an identifier of a relay terminal or the first terminal that receives the link response message.

In a possible implementation, the terminal identifier includes the identifier of the first terminal and the identifier of the second terminal, or the terminal identifier includes the identifier of the first terminal.

According to a seventh aspect, this application provides a relay link establishment apparatus, including a transceiver unit and a processing unit.

The transceiver unit is configured to receive first information, where the first information includes a discovery response message sent by each of a plurality of relay terminals, the discovery response message is a response message to a first discovery message, the discovery response message includes first indication information and first discovery information, the first indication information indicates relay terminals through which the first discovery information passes, the first discovery information includes a terminal identifier and a relay service code, and the first discovery message is used by a first terminal to discover a second terminal.

The processing unit is configured to: determine a first relay terminal based on the first information, where the first relay terminal is one of the plurality of relay terminals; and send a link message to the first relay terminal, where the link message includes the terminal identifier and second indication information, and the second indication information is the first indication information in the discovery response message sent by the first relay terminal.

In this application, the first information including the discovery response message sent by each of the plurality of relay terminals is received, to determine the first relay terminal, and the link message is further sent to the first relay terminal, to establish a relay link between the first terminal and the second terminal. The discovery response message in the first information includes an indication of the relay terminals through which the first discovery information passes. Therefore, in a process of determining the first relay terminal based on the first information, a discovery response message in which first indication information indicates the smallest number of relay terminals through which the first discovery information passes may be selected, and a relay terminal that sends the discovery response message is determined as the first relay terminal, to improve relay link efficiency and further save radio resources for relay communication.

According to an eighth aspect, this application provides a relay link establishment apparatus, including a transceiver unit and a processing unit.

The transceiver unit is configured to receive second information, where the second information includes a second discovery message broadcast by each of a plurality of relay terminals, the second discovery message is used by a first terminal to discover a second terminal, the second discovery message is from the relay terminal, the second discovery message includes fourth indication information and second discovery information, the fourth indication information indicates relay terminals through which the second discovery information passes, the second discovery information includes a terminal identifier and a relay service code, and the second discovery information is from the second terminal.

The processing unit is configured to: determine a first relay terminal based on the second information, where the first relay terminal is one of the plurality of relay terminals; and send a link message to the first relay terminal, where the link message includes the terminal identifier and fifth indication information, and the fifth indication information is the fourth indication information in the second discovery message sent by the first relay terminal.

In this application, the second information including the second discovery message sent by each of the plurality of relay terminals is received, to determine the first relay terminal, and the link message is further sent to the first relay terminal, to establish a relay link between the first terminal and the second terminal. The second discovery message in the second information includes an indication of the relay terminals through which the second discovery information passes. Therefore, in a process of determining the first relay terminal based on the second information, a second discovery message in which fourth indication information indicates the smallest number of relay terminals through which the second discovery information passes may be selected, and a relay terminal that sends the second discovery message is determined as the first relay terminal, to improve relay link efficiency and further save radio resources for relay communication.

According to a ninth aspect, this application provides a relay link establishment apparatus, including a transceiver unit and a processing unit.

The transceiver unit is configured to receive a link message sent by a first terminal or another relay terminal, where the link message includes a terminal identifier and second indication information, the second indication information is first indication information in a discovery response message sent by a first relay terminal, the first relay terminal is a relay terminal determined based on first information, and the first information is information that is received by the first terminal and that includes a discovery response message sent by each of a plurality of relay terminals.

The processing unit is configured to determine, based on the second indication information, another relay terminal or a second terminal to which the link message is to be sent, and send the link message to the another relay terminal or the second terminal.

In this application, the link message sent by the first terminal or another relay terminal is received. The another relay terminal or the second terminal to which the link message is to be sent is determined based on the second indication information, and the link message is sent to the another relay terminal or the second terminal. A to-be-sent first discovery message is determined based on a number of relay terminals indicated by the first indication information, so that radio resources for relay link establishment and relay communication can be saved.

According to a tenth aspect, this application provides a relay link establishment apparatus, including a transceiver unit and a processing unit.

The transceiver unit is configured to receive a link message sent by a first terminal or another relay terminal, where the link message includes a terminal identifier and fifth indication information, and the fifth indication information is fourth indication information in a second discovery message sent by a first relay terminal.

The processing unit is configured to determine, based on the fifth indication information, another relay terminal or a second terminal to which the link message is to be sent, and send the link message to the another relay terminal or the second terminal.

In this application, the link message sent by the first terminal or another relay terminal is received. The another relay terminal or the second terminal to which the link message is to be sent is determined based on the fifth indication information, and the link message is sent to the another relay terminal or the second terminal. By determining the relay terminal or the second terminal to which the link message is to be sent based on the fifth indication information in the link message, accuracy of relay link establishment is improved, signaling overhead in the link establishment process is reduced, and the quality of relay communication is further enhanced.

According to an eleventh aspect, this application provides a relay link establishment apparatus, including a transceiver unit and a processing unit.

The transceiver unit is configured to receive a link message sent by a relay terminal, where the link message includes a terminal identifier and second indication information, the second indication information is first indication information in a discovery response message sent by a first relay terminal, the first relay terminal is a relay terminal determined based on first information, and the first information is information that is received by a first terminal and that includes a discovery response message sent by each of a plurality of relay terminals.

The processing unit is configured to: generate, based on the terminal identifier and the second indication information that are included in the link message, a link response message corresponding to the link message, and determine the relay terminal corresponding to the link response message; and send the link response message to the relay terminal corresponding to the link response message.

In this application, the link message sent by the relay terminal is received, the link response message corresponding to the link message is generated based on the terminal identifier and the second indication information that are included in the link message, the relay terminal corresponding to the link response message is determined, and the link response message is sent to the relay terminal corresponding to the link response message. By determining the terminal to which the link response message is to be sent based on the second indication information in the link message, accuracy of relay link establishment is improved, signaling overhead in the link establishment process is reduced, and quality of relay communication is further enhanced.

According to a twelfth aspect, this application provides a relay link establishment apparatus, including a transceiver unit and a processing unit.

The transceiver unit is configured to receive a link message sent by a relay terminal, where the link message includes a terminal identifier and fifth indication information, the fifth indication information is fourth indication information in a second discovery message sent by a first relay terminal, the first relay terminal is a relay terminal determined based on second information, and the second information is information that is received by a first terminal and that includes a second discovery message sent by each of a plurality of relay terminals.

The processing unit is configured to: generate, based on the terminal identifier and the fifth indication information that are included in the link message, a link response message corresponding to the link message, and determine the relay terminal corresponding to the link response message; and send the link response message to the relay terminal corresponding to the link response message.

In this application, the link message sent by the relay terminal is received, the link response message corresponding to the link message is generated based on the terminal identifier and the fifth indication information that are included in the link message, the relay terminal corresponding to the link response message is determined, and the link response message is sent to the relay terminal corresponding to the link response message. By determining the terminal to which the link response message is to be sent based on the fifth indication information in the link message, accuracy of relay link establishment is improved, signaling overhead in the link establishment process is reduced, and quality of relay communication is further enhanced.

According to a thirteenth aspect, this application provides a relay link establishment device, including a processor, a memory, and a communication interface.

The memory is configured to store computer-executable program code; the program code includes instructions; and when the processor executes the instructions, the instructions cause the relay link establishment device to perform the method according to the first aspect, the method according to the second aspect, the method according to the third aspect, the method according to the fourth aspect, the method according to the fifth aspect, or the method according to the sixth aspect.

According to a fourteenth aspect, a computer storage medium is provided. The computer storage medium stores program code. The program code indicates instructions for performing the method according to any one of the first aspect, the second aspect, the third aspect, the fourth aspect, the fifth aspect, and the sixth aspect, or the possible implementations of the first aspect, the second aspect, the third aspect, the fourth aspect, the fifth aspect, and the sixth aspect.

According to a fifteenth aspect, a processor is provided, configured to be coupled to a memory, and configured to perform the method according to any one of the first aspect, the second aspect, the third aspect, the fourth aspect, the fifth aspect, and the sixth aspect, or the possible implementations of the first aspect, the second aspect, the third aspect, the fourth aspect, the fifth aspect, and the sixth aspect.

According to a sixteenth aspect, a computer program product including instructions is provided. When the computer program product runs on a computer, the computer is caused to perform the method according to any one of the first aspect, the second aspect, the third aspect, the fourth aspect, the fifth aspect, and the sixth aspect, or the possible implementations of the first aspect, the second aspect, the third aspect, the fourth aspect, the fifth aspect, and the sixth aspect.

According to a seventeenth aspect, a computer storage medium is provided. The computer storage medium stores program code. The program code indicates instructions for performing the method according to any one of the first aspect, the second aspect, the third aspect, the fourth aspect, the fifth aspect, and the sixth aspect, or the possible implementations of the first aspect, the second aspect, the third aspect, the fourth aspect, the fifth aspect, and the sixth aspect.

### BRIEF DESCRIPTION OF DRAWINGS

FIG. 1 is a diagram of an application scenario according to an embodiment of this application;
FIG. 2 is a diagram of another application scenario according to an embodiment of this application;
FIG. 3 is a flowchart of a relay link establishment method according to an embodiment of this application;
FIG. 4 is a signaling diagram of a relay link establishment method according to an embodiment of this application;
FIG. 5a and FIG. 5b are a signaling diagram of another relay link establishment method according to an embodiment of this application;
FIG. 6 is a signaling diagram of another relay link establishment method according to an embodiment of this application;
FIG. 7a and FIG. 7b are a signaling diagram of another relay link establishment method according to an embodiment of this application;
FIG. 8 is a flowchart of another relay link establishment method according to an embodiment of this application;
FIG. 9 is a flowchart of another relay link establishment method according to an embodiment of this application;
FIG. 10 is a flowchart of another relay link establishment method according to an embodiment of this application;
FIG. 11 is a flowchart of another relay link establishment method according to an embodiment of this application;
FIG. 12 is a block diagram of a relay link establishment apparatus 1200 on a first terminal side according to an embodiment of this application;
FIG. 13 is a block diagram of a relay link establishment apparatus 1300 on a relay terminal side according to an embodiment of this application;
FIG. 14 is a block diagram of a relay link establishment apparatus 1400 on a second terminal side according to an embodiment of this application;
FIG. 15 is a block diagram of a relay link establishment device 1500 on a first terminal side according to an embodiment of this application;
FIG. 16 is a block diagram of a relay link establishment device 1600 on a relay terminal side according to an embodiment of this application; and
FIG. 17 is a block diagram of a relay link establishment device 1700 on a second terminal side according to an embodiment of this application.

### DESCRIPTION OF EMBODIMENTS

The following describes technical solutions of this application with reference to the accompanying drawings.

For ease of understanding of embodiments of this application, the following several descriptions are first provided.

First, in this application, indicating includes explicitly indicating (also referred to as directly indicating) and implicitly indicating (also referred to as indirectly indicating). Explicitly indicating information A means including the information A. Implicitly indicating information A means indicating the information A by using a correspondence between the information A and information B and by directly indicating the information B, where the correspondence between the information A and the information B may be predefined, prestored, pre-provisioned, or preconfigured. Alternatively, indicating information A may be performed by using information B and a preset rule.

Second, in this application, that information C is used to determine information D includes that the information D is determined based only on the information C, and also includes that the information D is determined based on the information C and other information. In addition, that the information C is used to determine the information D may further include an indirect determining case, for example, a case in which the information D is determined based on information E, and the information E is determined based on the information C.

Third, in this application, "at least one" indicates one or more, "a plurality of" indicates two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between associated objects, but does not exclude an "and" relationship between the associated objects. A specific indicated meaning may be understood with reference to the context. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

Fourth, in embodiments of this application, prefix words such as "first" and "second" are merely used for distinguishing and describing different things belonging to a same name category, and are not intended to limit a sequence, sizes, or a number of things. For example, "first information" and "second information" are merely different information, and have no time sequence relationship, magnitude relationship, or priority relationship.

Fifth, "sending" and "receiving" in this application indicate a signal transmission direction. For example, "sending information to a terminal" may be understood as a destination of the information being the terminal, and may include direct sending through an air interface or indirect sending by another unit or module through an air interface. "Receiving information from a network device" may be understood as a source of the information being the network device, and may include direct receiving from the network device through an air interface, or indirect receiving from the network device from another unit or module through an air interface. "Sending" may alternatively be understood as "outputting" of a chip interface, and "receiving" may alternatively be understood as "inputting" of the chip interface.

In other words, sending and receiving may be performed between devices, for example, between a terminal and a network device; or sending or receiving may be performed inside a device, for example, between components, modules, chips, software modules, or hardware modules inside the device through a bus, a cable, or an interface.

Sixth, in embodiments of this application, both "when" and "if" mean that an apparatus performs corresponding processing in an objective situation, are not intended to limit time, do not require the apparatus to necessarily have a determining action during implementation, and do not mean another limitation.

Seventh, in this application, a term like "example", "for example", "such as", or "like" indicates an example, an illustration, or a description. Any embodiment or design scheme described as "example", "for example", "such as", or "like" in this application should not be explained as being more preferred or having more advantages than another embodiment or design scheme. Specifically, use of the term "example", "for example", "such as", or "like" is intended to present the relative concept in a specific manner.

Eighth, in this specification, downlink channel measurement is used as an example to describe the method provided in this application. However, this should not constitute a limitation on a scenario to which this solution is applicable. In uplink channel measurement, a network device may configure, for a terminal, a reference signal resource group corresponding to a plurality of CCs, and then receive, on a plurality of reference signal resources in the reference signal resource group, reference signals, and perform channel measurement and reporting. A person skilled in the art may obtain a procedure of uplink channel measurement by making simple variations based on a same concept and embodiments of this specification. For brevity, details are not described in this specification.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a sidelink (sidelink, SL) communication system, a universal mobile telecommunications system (universal mobile telecommunications system, UMTS), a worldwide interoperability for microwave access (worldwide interoperability for microwave access, WiMAX) communication system, a fifth generation (5th generation, 5G) mobile communication system, or a new radio access technology (new radio access technology, NR). The 5G mobile communication system may include non-standalone (non-standalone, NSA) deployment and/or standalone (standalone, SA) deployment. The technical solutions provided in this application may be further applied to a future communication system, for example, a 6th generation (6th generation, 6G) mobile communication system. This is not limited in this application.

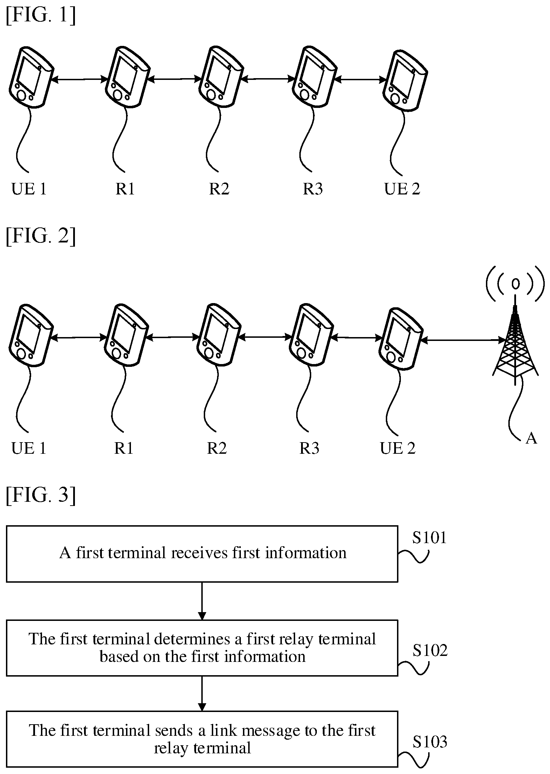

FIG. 1 is a diagram of an application scenario according to an embodiment of this application. As shown in FIG. 1, when terminal devices perform terminal-to-terminal (UE-to-UE, U2U) communication over a relay link, a network architecture in an application scenario includes a first terminal, a second terminal, and one or more relay terminals. The first terminal is communicatively linked to the second terminal via the one or more relay terminals. The first terminal is a source terminal (Source UE) of the relay link, and the second terminal is a target terminal (Target UE) of the relay link. The source terminal (Source UE) is a terminal that initiates the relay link, and the target terminal (Target UE) is a terminal that accepts the relay link. The first terminal may alternatively be a target terminal (Target UE) in another relay link or relay communication process. Similarly, the second terminal may alternatively be a source terminal (Source UE) in another relay link or relay communication process. For example, as shown in FIG. 1, the first terminal UE 1 establishes a communication link to the second terminal UE 2 via a first relay terminal R1, a second relay terminal R2, and a third relay terminal R3, to complete a relay link establishment method in this application.

FIG. 2 is a diagram of another application scenario according to an embodiment of this application. As shown in FIG. 2, when a terminal device performs terminal-to-network (UE-to-Network, U2N) communication over a relay link, a network architecture in an application scenario includes a network device, a first terminal, a second terminal, and one or more relay terminals. The first terminal is communicatively linked to the network device via the one or more relay terminals and the second terminal. The first terminal is a remote terminal (Remote UE) of the relay link, and the second terminal is a relay terminal that has been linked to the network device. For example, as shown in FIG. 2, the first terminal UE 1 establishes a communication link to the second terminal UE 2 via a first relay terminal R1, a second relay terminal R2, and a third relay terminal R3, to complete a relay link establishment method in this application. A network link has been established between the second terminal UE 2 and the network device A.

In embodiments of this application, the terminal and the network device may be hardware devices, or may be software functions running on dedicated hardware or on general-purpose hardware, for example, virtualized functions instantiated on a platform (for example, a cloud platform), or may be entities including dedicated or general-purpose hardware devices and software functions. Specific forms of the terminal and the network device are not limited in this application.

To better understand methods provided in embodiments of this application, the following briefly describes terms in this application.

The terminal may also be referred to as a terminal device, a user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart home, smart office, smart wearables, smart transportation, and smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like.

An access network device is an access device through which a terminal accesses a wireless network in a wireless manner, in other words, a radio access network (radio access network, RAN) node (or device) that links the terminal to the wireless network. The access network device may be an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission and reception point, TRP), or the like. Alternatively, the access network device may be a network device or a transmission point (TRP or TP) in a 5G (for example, NR) system, may be one or a group of antenna panels (including a plurality of antenna panels) of a base station in the 5G system, or may be a network node, for example, a baseband unit (BBU) or a distributed unit (distributed unit, DU), that constitutes a network device or a transmission point. A specific technology and a specific device form that are used by the radio access network device are not limited in embodiments of this application. In embodiments of this application, the access network device may also be referred to as a network device or a base station for short. Unless otherwise specified, in embodiments of this application, the network device is an access network device.

Proximity service (Proximity Service, ProSe) communication allows direct communication between user equipments (user equipments, UEs), enabling a UE to communicate via another UE or access a network via another UE without wireless network coverage. Currently, ProSe communication has been applied to a 5G system. ProSe UEs are linked to each other through a proximity communication 5 (Proximity Communication 5, PC5) interface, and direct PC5 communication may be performed after mutual discovery between the UEs is completed.

In terminal-to-terminal (UE-to-UE, U2U) communication, data transmission between a source terminal and a target terminal is performed via a relay terminal.

In terminal-to-network (UE-to-Network, U2N) communication, data transmission between a remote terminal and a network device is performed via a relay terminal.

The following describes in detail methods provided in this application with reference to the accompanying drawings.

FIG. 3 is a flowchart of a relay link establishment method according to an embodiment of this application. As shown in FIG. 3, the relay link establishment method according to this embodiment of this application is performed by a first terminal. The method includes the following steps.

S101: The first terminal receives first information.

The first information includes a discovery response message sent by each of a plurality of relay terminals, the discovery response message is a response message to a first discovery message, and the first discovery message is used by the first terminal to discover a second terminal.

In this embodiment, the first discovery message is a discovery message sent by the first terminal in broadcast mode to discover the second terminal. In an example, if the first discovery message is directly received by the second terminal, the first terminal can discover the second terminal without a relay terminal. In other words, in U2U communication, a source terminal directly discovers a target terminal; or in U2N communication, a remote terminal directly discovers a relay terminal that has been linked to a network device. After receiving the first discovery message, the second terminal generates a corresponding discovery response message, and feeds back the discovery response message to the first terminal. In an example, if the first discovery message broadcast by the first terminal is not directly received by the second terminal, but is received by a relay terminal, the relay terminal adds identity information of the relay terminal, for example, a user information identifier user info ID, to the first discovery message, and then sends the first discovery message in broadcast mode, until the first discovery message is received by the second terminal. After receiving the first discovery message, the second terminal generates a corresponding discovery response message, and sends, in unicast mode, the discovery response message to a relay terminal that sends the first discovery message. Then, the relay terminal that receives the discovery response message continues to send, in unicast mode, the discovery response message to a relay terminal that sends the first discovery message to the relay terminal, until the discovery response message is sent to the first terminal. In this embodiment, the first discovery message broadcast by the first terminal is received by the second terminal after being received and forwarded by different relay terminals. To be specific, the first terminal discovers the second terminal via the different relay terminals, and the second terminal generates a response message for each received first discovery message, and sends the response message to the first terminal via the relay terminals through which the first discovery message passes. In this embodiment, the discovery response messages included in the first information are all discovery response messages corresponding to the first discovery message that are received by the first terminal.

The discovery response message includes first indication information and first discovery information, the first indication information indicates relay terminals through which the first discovery information passes, and the first discovery information includes a terminal identifier and a relay service code.

In this embodiment, the terminal identifier is an identifier of a terminal for which it has been determined before relay link establishment that a relay link is needed. Optionally, the terminal identifier may be a user information identifier User Info ID of the terminal. Specifically, in U2U communication, terminals for which it has been determined that a relay link is needed include a source terminal and a destination terminal. Therefore, in the scenario shown in FIG. 1, terminal identifiers include an identifier of the first terminal and an identifier of the second terminal. Specifically, in U2N communication, a terminal for which it has been determined that a relay link is needed includes only a remote terminal. Therefore, in the scenario shown in FIG. 2, a terminal identifier includes an identifier of the first terminal. In this embodiment, the relay service code (Relay Service Code, RSC) is a relay service code preconfigured before the relay link is established, and represents a type of a relay service. In this embodiment, the first discovery information is information that has been determined before the relay link is established, the first discovery information is included in the discovery message sent by the first terminal in broadcast mode to discover the second terminal, that is, the first discovery message. The first discovery information is also included in the response message to the first discovery message, that is, the discovery response message.

In this embodiment, the first indication information indicates the relay terminals through which the first discovery information passes. For example, the first indication information may include user information identifiers User Info IDs of the relay terminals through which the first discovery information passes. In the first discovery message, the first indication information indicates the relay terminals through which the first discovery information passes, and the first indication information is updated as different relay terminals receive and forward the first discovery message.

For example, in the scenario shown in FIG. 1, first indication information in a first discovery message broadcast by the first relay terminal R1 and received by the second relay terminal R2 indicates the first relay terminal, and first indication information in a first discovery message broadcast by the third relay terminal R3 and received by the second terminal UE 2 indicates the first relay terminal, the second relay terminal, and the third relay terminal. In the discovery response message, the first indication information indicates the relay terminals through which the first discovery information passes. Because the first discovery information, included in the first discovery message, has passed through all the relay terminals in a process in which the first terminal discovers the second terminal, the first indication information is not updated as the different relay terminals receive and forward the discovery response message. For example, in the scenario shown in FIG. 1, first indication information in a discovery response message sent by the first relay terminal R1 and received by the first terminal UE 1 indicates the first relay terminal, the second relay terminal, and the third relay terminal.

For example, in the scenario shown in FIG. 2, first indication information in a first discovery message broadcast by the first relay terminal R1 and received by the second relay terminal R2 indicates the first relay terminal, and first indication information in a first discovery message broadcast by the third relay terminal R3 and received by the second terminal UE 2 indicates the first relay terminal, the second relay terminal, the third relay terminal, and the second terminal. In the discovery response message, the first indication information indicates the relay terminals through which the first discovery information passes. Because the first discovery information, included in the first discovery message, has passed through all the relay terminals on a path in a process in which the first terminal discovers the second terminal, the first indication information is not updated as the different relay terminals receive and forward the discovery response message. For example, in the scenario shown in FIG. 2, first indication information in a discovery response message sent by the first relay terminal R1 and received by the first terminal UE 1 indicates the first relay terminal, the second relay terminal, the third relay terminal, and the second terminal.

S102: The first terminal determines a first relay terminal based on the first information.

In this embodiment, the first terminal may determine the first relay terminal based on the first information described in step S101. The first relay terminal is a relay terminal that has a direct link with the first terminal. The first relay terminal is one of the plurality of relay terminals, that is, the first relay terminal is one of the plurality of relay terminals that send the discovery response message to the first terminal and that are described in step S101. A process in which the first terminal determines the first relay terminal based on the first information is not limited in this application. Optionally, the first relay terminal may be determined based on the first indication information in the first information. To be specific, the first relay terminal may be determined based on the relay terminals through which the first discovery information passes and that are indicated by the first indication information in each discovery response message in the first information. In an example, the first relay terminal may be determined based on a number of relay terminals through which the first discovery information passes and that are indicated by the first indication information in each discovery response message in the first information. For example, a discovery response message in which first indication information indicates the smallest number of relay terminals through which the first discovery information passes is selected from all discovery response messages, and a relay terminal that sends the discovery response message is determined as the first relay terminal.

In an example, the first terminal may determine one first relay terminal based on the first information. In an example, the first terminal may determine a plurality of first relay terminals based on the first information.

S103: The first terminal sends a link message to the first relay terminal.

The link message includes the terminal identifier and second indication information, and the second indication information is the first indication information in the discovery response message sent by the first relay terminal. For descriptions of the terminal identifier and the discovery response message, refer to the descriptions in step S101. Details are not described in this step again. In this embodiment, because the second indication information is the first indication information in the discovery response message sent by the first relay terminal, based on the descriptions of the first indication information in the discovery response message in step S101, the second indication information is an identifier of a relay terminal corresponding to the first indication information in the discovery response message sent by the first relay terminal. For example, in the scenario shown in FIG. 1, second indication information includes an identifier of the first relay terminal, an identifier of the second relay terminal, and an identifier of the third relay terminal. For example, in the scenario shown in FIG. 2, second indication information includes an identifier of the first relay terminal, an identifier of the second relay terminal, an identifier of the third relay terminal, and an identifier of the second terminal.

In this embodiment, after the first terminal determines the first relay terminal based on the first information as described in step S102, the first terminal may send the link message to the first relay terminal. A process in which the first terminal sends the link message to the first relay terminal is not limited in this application. In an example, a layer-2 address of the first relay terminal may be determined based on an identifier of the first relay terminal, and then the link message is sent to the first relay terminal based on the layer-2 address of the first relay terminal, to establish a relay link between the first terminal and the second terminal.

Optionally, types of link messages sent by the first terminal include a direct communication request (Direct Communication Request, DCR message for short) and a link modification request (Link Modification Request, LMR for short). In an example, before the link message is sent, if it is determined that the first terminal is not linked to the first relay terminal through a proximity communication 5 (Proximity communication 5, PC5) interface, the DCR message is sent. In an example, before the link message is sent, if it is determined that the first terminal is linked to the first relay terminal through a proximity communication 5 (Proximity communication 5, PC5) interface, the LMR message is sent, to reuse the existing link between the first terminal and the first relay terminal. Optionally, the LMR message further includes the layer-2 address of the first relay terminal.

In this embodiment, the first terminal receives the first information including the discovery response message sent by each of the plurality of relay terminals, to determine the first relay terminal, and further sends the link message to the first relay terminal, to establish the relay link between the first terminal and the second terminal. The discovery response message in the first information includes an indication of the relay terminals through which the first discovery information passes. Therefore, in a process of determining the first relay terminal based on the first information, the discovery response message in which the first indication information indicates the smallest number of relay terminals through which the first discovery information passes may be selected, and the relay terminal that sends the discovery response message is determined as the first relay terminal, to improve relay link efficiency and further save radio resources for relay communication.

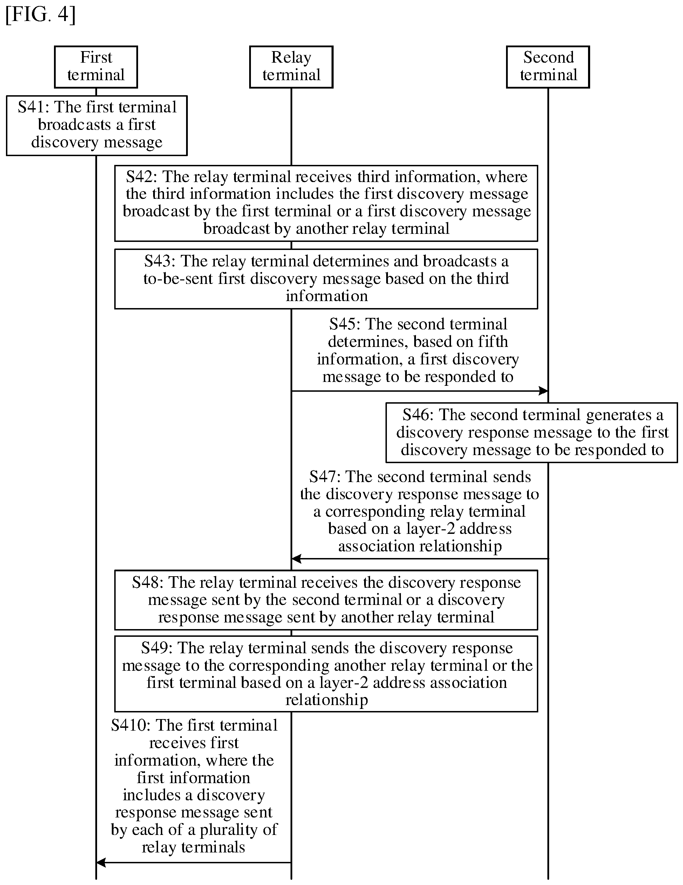

FIG. 4 is a signaling diagram of a relay link establishment method according to an embodiment of this application. As shown in FIG. 4, the method includes the following steps.

S41: A first terminal broadcasts a first discovery message.

The first discovery message is used by the first terminal to discover a second terminal. The first discovery message includes first discovery information, first hop count information, and first indication information, where the first indication information indicates relay terminals through which the first discovery information passes. In this embodiment, for descriptions of the first discovery information and the first indication information, refer to the descriptions in step S101. Details are not described in this step again. Because the first indication information included in the first discovery message is updated as different relay terminals receive and forward the first discovery message, the first indication information included in the first discovery message broadcast by the first terminal indicates that the first discovery information has not passed through a relay terminal.

The first hop count information is used to limit a maximum number of hops for transmission of the first discovery information. In an example, the first hop count information is a value of a time to live of the first discovery message, and a function of the time to live (Time To Live, TTL for short) is to limit a time in which an IP packet exists in a computer network. Specifically, although the TTL is literally translated as the time to live, the TTL actually represents a maximum number of hops the IP packet can be forwarded in the computer network. A TTL field is set by a transmitter of the IP packet. On an entire forwarding path from a source to a destination, each router that the IP packet passes through modifies a value of the TTL field. Specifically, the router decreases the value of the TTL by 1, and then forwards the IP packet. If the TTL is decreased to 0 before the IP packet reaches a destination IP address, a router discards the received IP packet with the TTL=0, and sends, to the transmitter of the IP packet, an ICMP time exceeded message indicating that the packet of the transmitter exceeds the time to live value. Specifically, if the value of the time to live TTL is not decreased to 0, a number of hops for transmission of the first discovery information does not reach the maximum number of hops. In an example, the first hop count information is a maximum hop count value, and the maximum hop count value needs to be combined with the first indication information included in the first discovery message to limit the maximum number of hops for transmission of the first discovery information. For example, if a number of relay terminals indicated by the first indication information is less than the maximum hop count value, the number of hops for transmission of the first discovery information does not reach the maximum number of hops.

In this embodiment, the first terminal broadcasts the first discovery message, and then the first discovery message is received by a plurality of relay terminals. For example, in the scenario shown in FIG. 1, the first terminal UE 1 broadcasts a first discovery message, and the first discovery message is separately received by the first relay terminal and the second relay terminal.

S42: A relay terminal receives third information, where the third information includes the first discovery message broadcast by the first terminal or a first discovery message broadcast by another relay terminal.

The first discovery message includes the first discovery information, the first hop count information, and first indication information. The first hop count information is used to limit the maximum number of hops for transmission of the first discovery information. The first indication information indicates relay terminals through which the first discovery information passes. For descriptions of the first discovery information, the first indication information, and the first hop count information, refer to the descriptions in step S41. Details are not described in this step again. The first indication information included in the first discovery message is updated as different relay terminals receive and forward the first discovery message. Therefore, if the first discovery message is the message broadcast by the first terminal, the first indication information included in the first discovery message indicates that the first discovery information has not passed through a relay terminal; or if the first discovery message is a message broadcast by another relay terminal, first indication information included in the first discovery message indicates relay terminals through which the first discovery information passes, where the relay terminal broadcasting the first discovery message is included in the relay terminals through which the first discovery information passes and that are indicated by the first indication information.

In this embodiment, the relay terminal may receive the first discovery message broadcast by the first terminal in step S41, or the relay terminal may receive a first discovery message broadcast by another relay terminal. In an example, the third information received by the relay terminal includes the first discovery message broadcast by the first terminal and first discovery messages broadcast by a plurality of other relay terminals. In an example, the third information received by the relay terminal includes first discovery messages broadcast by a plurality of other relay terminals.

S43: The relay terminal determines and broadcasts a to-be-sent first discovery message based on the third information.

In this embodiment, the relay terminal may determine the to-be-sent first discovery message based on the third information received in step S42, and broadcast the to-be-sent first discovery message, where the third information includes the first discovery message broadcast by the first terminal or another relay terminal. The first discovery message includes the first discovery information, the first hop count information, and the first indication information. The first hop count information is used to limit the maximum number of hops for transmission of the first discovery information. The first indication information indicates the relay terminals through which the first discovery information passes. For descriptions of the first discovery information, the first indication information, and the first hop count information, refer to the descriptions in step S41. Details are not described in this step again.

A process in which the relay terminal determines and broadcasts the to-be-sent first discovery message based on the third information is not limited in this application. Optionally, the to-be-sent first discovery message may be determined based on the first hop count information and/or the first indication information included in the third information.

In an example, the to-be-sent first discovery message may be determined based on the first indication information included in the third information. Specifically, based on the first indication information in each first discovery message, a number of relay terminals indicated by the first indication information in the first discovery message may be determined. Then, a first discovery message corresponding to first indication information indicating relay terminals whose number is the smallest or indicating relay terminals whose number is less than a preset number threshold may be determined as the to-be-sent first discovery message. The to-be-sent first discovery message is determined based on the number of relay terminals indicated by the first indication information, so that radio resources for relay link establishment and relay communication can be saved.

In an example, the to-be-sent first discovery message may be determined based on the first indication information included in the third information. Specifically, based on the first indication information in each first discovery message, a first discovery message corresponding to first indication information indicating relay terminals that do not include the current relay terminal may be determined as the to-be-sent first discovery message. The to-be-sent first discovery message is determined based on a number of relay terminals indicated by the first indication information, so that a loop phenomenon and a broadcast storm phenomenon in a relay discovery process can be avoided, relay link establishment efficiency is improved, and radio resources for relay link establishment are saved.

In an example, the to-be-sent first discovery message may be determined based on the first hop count information included in the third information. Specifically, based on the descriptions of the first hop count information in step S41, a first discovery message in which first discovery information does not reach the maximum number of hops may be determined as the to-be-sent first discovery message.

In an example, the to-be-sent first discovery message may be determined based on the first hop count information included in the third information and the first indication information. Specifically, based on the first hop count information, a first discovery message in which first discovery information does not reach the maximum number of hops may be selected. In addition, based on the first indication information, a first discovery message corresponding to first indication information indicating relay terminals whose number is the smallest or indicating relay terminals whose number is less than a preset number threshold may be selected. In addition, based on the first indication information, a first discovery message corresponding to first indication information indicating relay terminals that do not include the current relay terminal may be selected. A first discovery message that meets all the three selection conditions is determined as the to-be-sent first discovery message.

Optionally, the third information further includes signal quality of the first discovery message. In this case, determining and broadcasting the to-be-sent first discovery message based on the third information may include: determining and broadcasting the to-be-sent first discovery message based on the first indication information and one or more of the first hop count information and the signal quality of the first discovery message.

In an example, the to-be-sent first discovery message may be determined based on the signal quality of the first discovery message and the first indication information included in the third information. After the first discovery message broadcast by the first terminal or another relay terminal is received, the signal quality of the first discovery message may be obtained. Specifically, based on the signal quality of each first discovery message, a first discovery message whose signal quality is greater than a preset signal quality threshold may be selected. In addition, based on the first indication information, a first discovery message corresponding to first indication information indicating relay terminals whose number is the smallest or indicating relay terminals whose number is less than a preset number threshold may be selected. In addition, based on the first indication information, a first discovery message corresponding to first indication information indicating relay terminals that do not include the current relay terminal may be selected. A first discovery message that meets all the three selection conditions is determined as the to-be-sent first discovery message.

In an example, the to-be-sent first discovery message may be determined based on the first hop count information included in the third information, the first indication information, and the signal quality of the first discovery message. Specifically, based on the first hop count information, a first discovery message in which first discovery information does not reach the maximum number of hops may be selected. In addition, based on the first indication information, a first discovery message corresponding to first indication information indicating relay terminals whose number is the smallest or indicating relay terminals whose number is less than a preset number threshold may be selected. In addition, based on the signal quality of each first discovery message, a first discovery message whose signal quality is greater than a preset signal quality threshold may be selected. In addition, based on the first indication information, a first discovery message corresponding to first indication information indicating relay terminals that do not include the current relay terminal may be selected. A first discovery message that meets all the four selection conditions is determined as the to-be-sent first discovery message.

In this embodiment, after the to-be-sent first discovery message is determined through one of the foregoing processes, the determined to-be-sent first discovery message may be broadcast.

S44: The second terminal receives fifth information, where the fifth information includes the first discovery message broadcast by each of the plurality of relay terminals.

The first discovery message includes the first discovery information, the first hop count information, and first indication information. The first hop count information is used to limit the maximum number of hops for transmission of the first discovery information. The first indication information indicates relay terminals through which the first discovery information passes. For descriptions of the first discovery information, the first indication information, and the first hop count information, refer to the descriptions in step S41. Details are not described in this step again.

In this embodiment, the relay terminal determines and broadcasts the to-be-sent first discovery message based on the third information in step S43, and the fifth information received by the second terminal includes the first discovery message that is received by the second terminal and that is broadcast by each of the plurality of relay terminals.

S45: The second terminal determines, based on the fifth information, a first discovery message to be responded to.

In this embodiment, the second terminal determines, based on the fifth information received in step S44, the first discovery message to be responded to. A process in which the second terminal determines, based on the fifth information, the first discovery message to be responded to is not limited in this application. Optionally, the first discovery message to be responded to may be determined based on the first hop count information and/or the first indication information.

In an example, the first discovery message to be responded to may be determined based on the first indication information included in the fifth information. Specifically, based on the first indication information in each first discovery message, a number of relay terminals indicated by the first indication information in the first discovery message may be determined. Then, a first discovery message corresponding to first indication information indicating relay terminals whose number is the smallest or indicating relay terminals whose number is less than a preset number threshold may be determined as the first discovery message to be responded to. The first discovery message to be responded to is determined based on the number of relay terminals indicated by the first indication information, so that radio resources for relay link establishment and relay communication can be saved, and quality of a relay service can be improved.

In an example, the first discovery message to be responded to may be determined based on the first hop count information included in the fifth information. Specifically, based on the descriptions of the first hop count information in step S41, a first discovery message in which first discovery information does not reach the maximum number of hops may be determined as the first discovery message to be responded to.

In an example, the first discovery message to be responded to may be determined based on the first hop count information included in the fifth information and the first indication information. Specifically, based on the first hop count information, a first discovery message in which first discovery information does not reach the maximum number of hops may be selected. In addition, based on the first indication information, a first discovery message corresponding to first indication information indicating relay terminals whose number is the smallest or indicating relay terminals whose number is less than a preset number threshold may be selected. A first discovery message that meets both selection conditions is determined as the first discovery message to be responded to.

Optionally, the fifth information further includes signal quality of the first discovery message. In this case, determining, based on the fifth information, the first discovery message to be responded to may include: determining, based on the first indication information and one or more of the first hop count information, the signal quality of the first discovery message, and preset sixth indication information, the first discovery message to be responded to, where the preset sixth indication information indicates a relay terminal that the second terminal expects to select.

In an example, the first discovery message to be responded to may be determined based on the preset sixth indication information and the first indication information that is included in the fifth information. Specifically, based on the first indication information, a first discovery message corresponding to first indication information indicating relay terminals that include the relay terminal that the second terminal expects to select and that is indicated by the preset sixth indication information may be selected. There may be one or more relay terminals that the second terminal expects to select. In addition, based on the first indication information, a first discovery message corresponding to first indication information indicating relay terminals whose number is the smallest or indicating relay terminals whose number is less than a preset number threshold may be selected. A first discovery message that meets both selection conditions is determined as the first discovery message to be responded to. The first discovery message to be responded to is determined based on the number of relay terminals indicated by the first indication information, and based on the preset sixth indication information, the relay terminal may be specifically selected for a relay link, thereby improving the quality of service for relay link establishment.

In an example, the first discovery message to be responded to may be determined based on the signal quality of the first discovery message and the first indication information included in the fifth information. After the first discovery message broadcast by the first terminal or another relay terminal is received, the signal quality of the first discovery message may be obtained. Specifically, based on the signal quality of each first discovery message, a first discovery message whose signal quality is greater than a preset signal quality threshold may be selected. In addition, based on the first indication information, a first discovery message corresponding to first indication information indicating relay terminals whose number is the smallest or indicating relay terminals whose number is less than a preset number threshold may be selected. A first discovery message that meets both selection conditions is determined as the first discovery message to be responded to.

In an example, the first discovery message to be responded to may be determined based on the first hop count information included in the fifth information, the first indication information, the preset sixth indication information, and the signal quality of the first discovery message. Specifically, based on the first hop count information, a first discovery message in which first discovery information does not reach the maximum number of hops may be selected. In addition, based on the first indication information, a first discovery message corresponding to first indication information indicating relay terminals whose number is the smallest or indicating relay terminals whose number is less than a preset number threshold may be selected. Based on the first indication information, a first discovery message corresponding to first indication information indicating relay terminals that include the relay terminal that the second terminal expects to select and that is indicated by the preset sixth indication information may be selected. In addition, based on the signal quality of each first discovery message, a first discovery message whose signal quality is greater than a preset signal quality threshold may be selected. A first discovery message that meets all the four selection conditions is determined as the first discovery message to be responded to.

In an example, the first discovery message to be responded to may be determined based on the first indication information included in the fifth information, the preset sixth indication information, and the signal quality of the first discovery message. For a specific process, refer to the descriptions in the foregoing examples. Details are not described herein again. In an example, the first discovery message to be responded to may be determined based on the first hop count information included in the fifth information, the first indication information, and the signal quality of the first discovery message. For a specific process, refer to the descriptions in the foregoing examples. Details are not described herein again. In an example, the first discovery message to be responded to may be determined based on the first hop count information included in the fifth information, the first indication information, and the preset sixth indication information. For a specific process, refer to the descriptions in the foregoing examples. Details are not described herein again.

S46: The second terminal generates a discovery response message to the first discovery message to be responded to.

The discovery response message includes the first indication information and the first discovery information, the first indication information indicates the relay terminals through which the first discovery information passes, and the first discovery information includes a terminal identifier and a relay service code.

In this embodiment, based on the descriptions of the first indication information included in the discovery response message in step S101, the first indication information included in the discovery response message to the first discovery message to be responded to may be determined based on the first indication information included in the first discovery message to be responded to, and a discovery response message to each first discovery message to be responded to is further generated.

S47: The second terminal sends the discovery response message to a corresponding relay terminal based on a layer-2 address association relationship.

Optionally, in a process in which the first terminal sends the first discovery message to the relay terminal, or the relay terminal sends the first discovery message to another relay terminal, or the relay terminal sends the first discovery message to the second terminal, the terminal that receives the first discovery message establishes a layer-2 address association relationship between its own layer-2 address and a layer-2 address of the terminal that sends the first discovery message, and stores the established association relationship, where the layer-2 address of the terminal that sends the first discovery message is a source layer-2 address of the first discovery message, the layer-2 address of the terminal is a destination layer-2 address of the first discovery message. For example, after receiving the first discovery message sent by the relay terminal, the second terminal may establish an association relationship between a layer-2 address of the relay terminal and a layer-2 address of the second terminal, and store the association relationship in the second terminal, where the layer-2 address of the relay terminal is a source layer-2 address of the first discovery message, and the layer-2 address of the second terminal is a destination layer-2 address of the first discovery message.

In this embodiment, after the second terminal generates the discovery response message to the first discovery message to be responded to in step S46, the second terminal may determine, based on the layer-2 address association relationship, the relay terminal to which the discovery response message is to be sent, and send the discovery response message to the corresponding relay terminal. In an example, the second terminal may determine, based on the layer-2 address association relationship described above, the relay terminal to which the discovery response message is to be sent. Specifically, the second terminal may obtain the layer-2 address association relationship stored in the second terminal, set the destination layer-2 address of the first discovery message as a source layer-2 address of the discovery response message, set the source layer-2 address of the first discovery message as a destination layer-2 address of the discovery response message, and finally send the discovery response message to the corresponding relay terminal based on the determined destination layer-2 address of the discovery response message.

S48: The relay terminal receives the discovery response message sent by the second terminal or a discovery response message sent by another relay terminal.

The discovery response message is a response message to the first discovery message, the discovery response message includes the first indication information and the first discovery information, the first indication information indicates the relay terminals through which the first discovery information passes, the first discovery information includes the terminal identifier and the relay service code, and the first discovery message is used by the first terminal to discover the second terminal.

In an example, the relay terminal receives the discovery response message that is sent by the second terminal based on the layer-2 address association relationship and that is described in step S47.

In an example, the relay terminal receives a discovery response message sent by another relay terminal based on a layer-2 address association relationship. Specifically, the another relay terminal is a relay terminal that receives the discovery response message. Optionally, the another relay terminal may be a relay terminal that receives the discovery response message sent by the second terminal based on the layer-2 address association relationship. Optionally, the another relay terminal may alternatively be a relay terminal that receives a discovery response message sent by another relay terminal based on a layer-2 address association relationship. For a process in which the another relay terminal sends the discovery response message to the corresponding relay terminal based on the layer-2 address association relationship, refer to the process in which the second terminal sends the discovery response message to the corresponding relay terminal based on the layer-2 address association relationship as described in step S48. Details are not described in this step again.

S49: The relay terminal sends the discovery response message to the corresponding another relay terminal or the first terminal based on a layer-2 address association relationship.

In an example, if the relay terminal determines, based on the layer-2 address association relationship, that the discovery response message is to be sent to the another relay terminal, the relay terminal sends the discovery response message to the corresponding another relay terminal.

In an example, if the relay terminal determines, based on the layer-2 address association relationship, that the discovery response message is to be sent to the first terminal, the relay terminal sends the discovery response message to the first terminal.

S410: The first terminal receives first information, where the first information includes a discovery response message sent by each of the plurality of relay terminals.

The discovery response message is a response message to the first discovery message, the discovery response message includes first indication information and the first discovery information, the first indication information indicates relay terminals through which the first discovery information passes, the first discovery information includes the terminal identifier and the relay service code, and the first discovery message is used by the first terminal to discover the second terminal.

For descriptions of this step, refer to the descriptions in step S101. Details are not described in this step again.

S411: The first terminal determines a first relay terminal based on the first information.

The first relay terminal is one of the plurality of relay terminals.

A process in which the first terminal determines the first relay terminal based on the first information is not limited in this application. Optionally, determining the first relay terminal based on the first information may include: determining the first relay terminal based on the first indication information in the first information.

In an example, the first relay terminal may be determined based on the first indication information included in the first information. Specifically, a number of relay terminals indicated by the first indication information in the discovery response messages may be determined based on the first indication information in each discovery response message, and then a discovery response message corresponding to first indication information indicating relay terminals whose number is the smallest or indicating relay terminals whose number is less than a preset number threshold is selected as a selection condition for the first relay terminal. Specifically, a relay terminal that sends a discovery response message that meets the selection condition may be determined as the first relay terminal. The first relay terminal is determined based on the number of relay terminals indicated by the first indication information, so that radio resources for relay link establishment and relay communication can be saved, and quality of a relay service can be improved.

Optionally, the discovery response message further includes a time to live value; and/or the first information further includes signal quality of the discovery response message, where the time to live value is a value of a time to live of the first discovery message when the first discovery message corresponding to the discovery response message is responded to.

In a process of determining the first relay terminal based on the time to live value included in the discovery response message, a discovery response message with the smallest time to live value may be selected as a selection condition for determining the first relay terminal.

In a process of determining the first relay terminal based on the signal quality of the discovery response message, a discovery response message whose signal quality is greater than a preset signal quality threshold may be selected as a selection condition for determining the first relay terminal.

Optionally, determining the first relay terminal based on the first information may include: determining the first relay terminal based on the first indication information and one or more of the time to live value in the first information, the signal quality of the discovery response message, and preset third indication information, where the preset third indication information indicates a relay terminal that the first terminal expects to select.

In an example, the first relay terminal may be determined based on the time to live value in the first information, the preset third indication information, the signal quality of the discovery response message, and the first indication information. Specifically, based on the time to live value in the first information, a discovery response message with the smallest time to live value may be selected. In addition, based on the signal quality of the discovery response message, a discovery response message whose signal quality is greater than a preset signal quality threshold may be selected. In addition, based on the first indication information in the first information, a number of relay terminals indicated by the first indication information in the discovery response message may be determined, and then a discovery response message corresponding to first indication information indicating relay terminals whose number is the smallest or indicating relay terminals whose number is less than a preset number threshold is selected. In addition, based on the first indication information in the first information, a discovery response message corresponding to first indication information indicating relay terminals that include the relay terminal that the first terminal expects to select, as indicated by the preset third indication information, may be selected. A relay terminal that sends a discovery response message that meets all the four selection conditions is determined as the first relay terminal.

In an example, the first relay terminal may be determined based on the time to live value in the first information and the first indication information. For a specific process, refer to the descriptions in the foregoing examples. Details are not described herein again. In an example, the first relay terminal may be determined based on the signal quality of the discovery response message and the first indication information. For a specific process, refer to the descriptions in the foregoing examples. Details are not described herein again. In an example, the first relay terminal may be determined based on the preset third indication information and the first indication information. For a specific process, refer to the descriptions in the foregoing examples. Details are not described herein again. In an example, the first relay terminal may be determined based on the time to live value in the first information, the signal quality of the discovery response message, and the first indication information. For a specific process, refer to the descriptions in the foregoing examples. Details are not described herein again. In an example, the first relay terminal may be determined based on the signal quality of the discovery response message, the preset third indication information, and the first indication information. For a specific process, refer to the descriptions in the foregoing examples. Details are not described herein again. In an example, the first relay terminal may be determined based on the time to live value in the first information, the preset third indication information, and the first indication information. For a specific process, refer to the descriptions in the foregoing examples. Details are not described herein again.

In this embodiment, the terminal identifier includes an identifier of the first terminal and an identifier of the second terminal, or the terminal identifier includes an identifier of the first terminal. Specifically, in U2U communication, the terminal identifier includes the identifier of the first terminal and the identifier of the second terminal; and in U2N communication, the terminal identifier includes the identifier of the first terminal.

In this embodiment, in step S43, in the process in which the relay terminal determines and broadcasts the to-be-sent first discovery message based on the third information, the to-be-sent first discovery message is determined based on the number of relay terminals indicated by the first indication information, so that radio resources for relay link establishment and relay communication can be saved, and quality of a relay service can be improved; in step S45, in the process in which the second terminal determines, based on the fifth information, the first discovery message to be responded to, the first discovery message to be responded to is determined based on the number of relay terminals indicated by the first indication information, so that radio resources for relay link establishment and relay communication can be saved; and in step S411, in the process in which the first terminal determines the first relay terminal based on the first information, the first relay terminal is determined based on the number of relay terminals indicated by the first indication information, so that radio resources for relay link establishment and relay communication can be saved, and quality of a relay service can be improved.

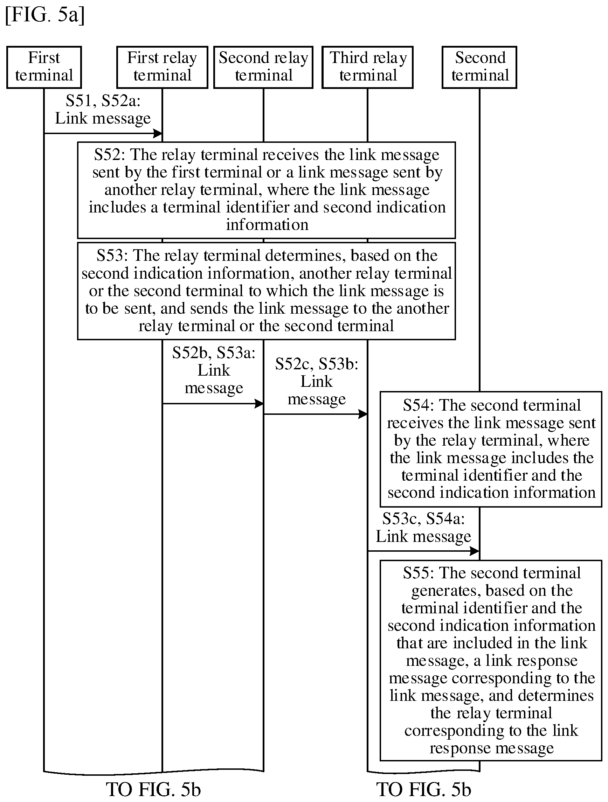

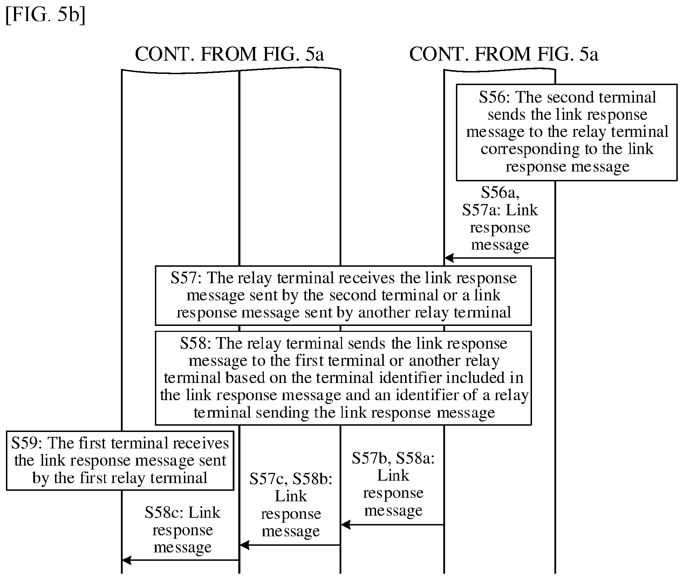

FIG. 5a and FIG. 5b are a signaling diagram of another relay link establishment method according to an embodiment of this application. As shown in FIG. 5a and FIG. 5b, the method includes the following steps.

S51: A first terminal sends a link message to a first relay terminal.

The link message includes a terminal identifier and second indication information, and the second indication information is first indication information in a discovery response message sent by the first relay terminal. For example, in the scenario shown in FIG. 1, second indication information is an identifier of the first relay terminal, an identifier of the second relay terminal, and an identifier of the third relay terminal. For example, in the scenario shown in FIG. 2, second indication information is an identifier of the first relay terminal, an identifier of the second relay terminal, an identifier of the third relay terminal, and an identifier of the second terminal.

In this embodiment, after the first terminal determines the first relay terminal based on the first information as described in step S411, the first terminal sends the link message to the first relay terminal. A process in which the first terminal sends the link message to the first relay terminal is not limited in this application. Optionally, an identifier of the first relay terminal may be determined based on the second indication information included in the link message; then, a layer-2 address of the first relay terminal is determined based on an association relationship between the identifier of the first relay terminal and the layer-2 address of the first relay terminal; and finally, the link message is sent to the first relay terminal based on a layer-2 address of the first relay terminal.

S52: A relay terminal receives the link message sent by the first terminal or a link message sent by another relay terminal, where the link message includes the terminal identifier and the second indication information.

The second indication information is the first indication information in the discovery response message sent by the first relay terminal. The first relay terminal is a relay terminal determined based on first information. The first information is information that is received by the first terminal and that includes a discovery response message sent by each of a plurality of relay terminals.

In an example, in the scenario shown in FIG. 1, the second indication information is the identifier of the first relay terminal, the identifier of the second relay terminal, and the identifier of the third relay terminal. Alternatively, in the scenario shown in FIG. 2, the second indication information is the identifier of the first relay terminal, the identifier of the second relay terminal, the identifier of the third relay terminal, and the identifier of the second terminal.

S52a: The first relay terminal receives the link message sent by the first terminal. For the process in which the first terminal sends the link message to the first relay terminal, refer to the descriptions in step S51. Details are not described in this step again.

S52b: A second relay terminal receives the link message sent by the first relay terminal.

S52c: A third relay terminal receives the link message sent by the second relay terminal.

S53: The relay terminal determines, based on the second indication information, another relay terminal or a second terminal to which the link message is to be sent, and sends the link message to the another relay terminal or the second terminal.

In this embodiment, based on an identifier of the relay terminal sending the link message and the second indication information, the relay terminal determines an identifier of the relay terminal receiving the link message, and may further send, based on the identifier of the relay terminal receiving the link message, the link message to the relay terminal receiving the link message.

In an example, in the scenario shown in FIG. 1, the second indication information is the identifier of the first relay terminal, the identifier of the second relay terminal, and the identifier of the third relay terminal. Alternatively, in the scenario shown in FIG. 2, the second indication information is the identifier of the first relay terminal, the identifier of the second relay terminal, the identifier of the third relay terminal, and the identifier of the second terminal.

A process in which the relay terminal determines, based on the second indication information, the another relay terminal or the second terminal to which the link message is to be sent, and sends the link message to the another relay terminal or the second terminal is not limited in this application.

Optionally, determining, based on the second indication information, the another relay terminal or the second terminal to which the link message is to be sent, and sending the link message to the another relay terminal or the second terminal may include:

If it is determined, based on the second indication information, that the link message is to be sent to the another relay terminal, the link message is unicast to the another relay terminal. Specifically, the relay terminal determines, based on the identifier of the relay terminal, namely, the relay terminal sending the link message, and the second indication information, the identifier of the relay terminal receiving the link message. If the identifier of the relay terminal receiving the link message corresponds to the another relay terminal, a layer-2 address of the relay terminal receiving the link message may be determined based on the identifier of the relay terminal receiving the link message. Further, the link message is unicast, based on the layer-2 address of the relay terminal receiving the link message, to the relay terminal receiving the link message. For example, in the scenario shown in FIG. 1, or in the scenario shown in FIG. 2, another relay terminal includes one of the first relay terminal, the second relay terminal, and the third relay terminal.

If it is determined, based on the second indication information, that the link message is to be sent to the second terminal, the link message is sent to the second terminal based on a type of the second terminal. Specifically, the relay terminal determines, based on the identifier of the relay terminal, namely, the relay terminal sending the link message, and the second indication information, the identifier of the relay terminal receiving the link message. If the identifier of the relay terminal receiving the link message corresponds to the second terminal, the link message may be sent to the second terminal based on the type of the second terminal. The type of the second terminal includes a relay device and a terminal device. For example, in the scenario shown in FIG. 1, a type of the second terminal is a terminal device. In the scenario shown in FIG. 2, a type of the second terminal is a relay device. A process of sending the link message to the second terminal based on the type of the second terminal is not limited in this application. Optionally, sending the link message to the second terminal based on the type of the second terminal may include:

If the type of the second terminal is the relay device, the link message is unicast to the second terminal. Specifically, if the type of the second terminal is the relay device, a layer-2 address of the second terminal may be determined based on an association relationship between an identifier of the second terminal and the layer-2 address of the second terminal. Further, the link message may be unicast to the second terminal based on the layer-2 address of the second terminal. If the type of the second terminal is the terminal device, the link message is broadcast. Specifically, if the type of the second terminal is the terminal device, when the association relationship between the identifier of the second terminal and the layer-2 address of the second terminal cannot be obtained, the link message may be broadcast, so that the second terminal receives the link message broadcast by the relay terminal.

S53a: The first relay terminal determines, based on the second indication information, that the link message is to be sent to the second relay terminal, and sends the link message to the second relay terminal. Specifically, the first relay terminal determines, based on the identifier of the first relay terminal and the second indication information, that the identifier of the relay terminal receiving the link message is an identifier of the second relay terminal, and may further determine a layer-2 address of the second relay terminal based on an association relationship between the identifier of the second relay terminal and the layer-2 address of the second relay terminal, and then send the link message to the second relay terminal based on the layer-2 address of the second relay terminal.

Examples are given below.

S53b: The second relay terminal determines, based on the second indication information, that the link message is to be sent to the third relay terminal, and sends the link message to the third relay terminal. Specifically, the second relay terminal determines, based on the identifier of the second relay terminal and the second indication information, that the identifier of the relay terminal receiving the link message is an identifier of the third relay terminal, and may further determine a layer-2 address of the third relay terminal based on an association relationship between the identifier of the third relay terminal and the layer-2 address of the third relay terminal, and then send the link message to the third relay terminal based on the layer-2 address of the third relay terminal.

S53c: The third relay terminal determines, based on the second indication information, that the link message is to be sent to the second terminal, and sends the link message to the second terminal. Specifically, in the scenario shown in FIG. 1, the third relay terminal determines, based on the identifier of the third relay terminal and the second indication information, that the third relay terminal is the last relay terminal, and a link message is to be sent to the second terminal. In this case, an association relationship between the identifier of the second terminal and a layer-2 address of the second terminal cannot be obtained. Optionally, the third relay terminal may broadcast the link message, so that the second terminal receives the link message broadcast by the third relay terminal. In the scenario shown in FIG. 2, the third relay terminal determines, based on the identifier of the third relay terminal and the second indication information, that an identifier of a relay terminal receiving a link message is the identifier of the second terminal, and may further determine a layer-2 address of the second terminal based on an association relationship between the identifier of the second terminal and the layer-2 address of the second terminal, and then send the link message to the second terminal based on the layer-2 address of the second terminal.

S54: The second terminal receives the link message sent by the relay terminal, where the link message includes the terminal identifier and the second indication information.

The second indication information is the first indication information in the discovery response message sent by the first relay terminal. The first relay terminal is a relay terminal determined based on first information. The first information is the information that is received by the first terminal and that includes the discovery response message sent by each of the plurality of relay terminals.

In this embodiment, after the relay terminal determines, based on the second indication information, the another relay terminal or the second terminal to which the link message is to be sent, and sends the link message to the another relay terminal or the second terminal, the second terminal receives the link message sent by the relay terminal. Specifically, in the scenario shown in FIG. 1, the second terminal receives the link message sent by the relay terminal based on the layer-2 address of the second terminal. In the scenario shown in FIG. 2, the second terminal receives the link message broadcast by the relay terminal.

An example is given below.

S54a: The second terminal receives the link message sent by the third relay terminal, where the link message includes the terminal identifier and the second indication information. Specifically, in the scenario shown in FIG. 1, the second terminal receives the link message sent by the third relay terminal based on the layer-2 address of the second terminal. In the scenario shown in FIG. 2, the second terminal receives the link message broadcast by the third relay terminal.

S55: The second terminal generates, based on the terminal identifier and the second indication information that are included in the link message, a link response message corresponding to the link message, and determines a relay terminal corresponding to the link response message.

Optionally, the link response message includes the terminal identifier, the identifier of the second terminal or an identifier of a relay terminal that sends the link response message, and an identifier of a relay terminal or the identifier of the first terminal that receives the link response message.

In this embodiment, the second terminal may generate, based on the terminal identifier and the second indication information that are included in the link message, the link response message corresponding to the link message. The link response message corresponding to the link message and generated by the second terminal includes the terminal identifier, the identifier of the second terminal, and the identifier of the relay terminal receiving the link response message. The relay terminal corresponding to the identifier of the relay terminal receiving the link response message is determined as the relay terminal corresponding to the link response message.

An example is given below.

S55a: The second terminal generates, based on the terminal identifier and the second indication information that are included in the link message, the link response message corresponding to the link message, and determines the third relay terminal corresponding to the link response message. The link response message generated by the second terminal includes the terminal identifier, the identifier of the second terminal, and the identifier of the third relay terminal.

S56: The second terminal sends the link response message to the relay terminal corresponding to the link response message.

In this embodiment, after the second terminal generates, based on the terminal identifier and the second indication information that are included in the link message, the link response message corresponding to the link message, and determines the relay terminal corresponding to the link response message, the second terminal may send the link response message to the relay terminal corresponding to the link response message. A process in which the second terminal sends the link response message to the relay terminal corresponding to the link response message is not limited in this application. Optionally, the layer-2 address of the relay terminal corresponding to the link response message may be determined based on the association relationship between the identifier of the relay terminal corresponding to the link response message, namely, the relay terminal receiving the link response message, and the layer-2 address of the relay terminal corresponding to the link response message. Further, the second terminal may send, based on the layer-2 address of the relay terminal corresponding to the link response message, the link response message to the relay terminal corresponding to the link response message.

An example is given below.

S56a: The second terminal sends a link response message to the third relay terminal corresponding to the link response message. Specifically, the second terminal may determine, based on the association relationship between the identifier of the relay terminal corresponding to the link response message, namely, the third relay terminal, and the layer-2 address of the third relay terminal, the layer-2 address of the third relay terminal corresponding to the link response message. Further, the second terminal may send the link response message to the third relay terminal based on the layer-2 address of the third relay terminal.

S57: The relay terminal receives the link response message sent by the second terminal or a link response message sent by another relay terminal.

The link response message is a response message to the link message, and the link response message includes the terminal identifier and an identifier of the relay terminal sending the link response message.

In this embodiment, for a process in which the relay terminal receives the link response message sent by the second terminal or another relay terminal, refer to the process in which the second terminal sends the link response message to the relay terminal corresponding to the link response message as described in step S56. Optionally, the relay terminal may receive the link response message sent by the second terminal or another relay terminal based on a layer-2 address of the relay terminal. In an example, if the link response message received by the relay terminal includes the identifier of the second terminal sending the link response message, the link response message received by the relay terminal is the link response message sent by the second terminal.

In an example, if the link response message received by the relay terminal includes the identifier of the another relay terminal sending the link response message, the link response message received by the relay terminal is a link response message sent by the another relay terminal. In this embodiment, the link response message sent by the another relay terminal is a link response message regenerated based on the link response message sent by the second terminal. A process of regenerating the link response message is not limited in this application. Optionally, a link message corresponding to the link response message received by the relay terminal may be determined based on the terminal identifier, the identifier of the second terminal sending the link response message, and the identifier of the relay terminal receiving the link response message that are included in the link response message sent by the second terminal; and based on the second indication information included in the link response message, the identifier, included in the regenerated link response message, of the first terminal or the relay terminal receiving the link response message is determined, and the link response message is further regenerated.

Examples are given below.

S57a: The third relay terminal receives the link response message sent by the second terminal. The link response message sent by the second terminal includes the terminal identifier, the identifier of the second terminal, and the identifier of the third relay terminal. In an example, the third relay terminal regenerates a link response message based on the link response message sent by the second terminal and the link message corresponding to the link response message. Optionally, the third relay terminal determines, based on the link response message sent by the second terminal and the link message corresponding to the link response message, the identifier, included in the link response message generated by the third relay terminal, of the second relay terminal receiving the link response message, and further determines the link response message generated by the third relay terminal.

S57b: The second relay terminal receives the link response message sent by the third relay terminal. The link response message sent by the third relay terminal includes the terminal identifier, the identifier of the third relay terminal, and the identifier of the second relay terminal. In an example, the second relay terminal regenerates a link response message based on the link response message sent by the third relay terminal and the link message corresponding to the link response message. Optionally, the second relay terminal determines, based on the link response message sent by the third relay terminal and the link message corresponding to the link response message, the identifier, included in the link response message generated by the second relay terminal, of the first relay terminal receiving the link response message, and further determines the link response message generated by the second relay terminal.

S57c: The first relay terminal receives the link response message sent by the second relay terminal. The link response message sent by the second relay terminal includes the terminal identifier, the identifier of the second terminal, and the identifier of the first relay terminal. In an example, the first relay terminal regenerates a link response message based on the link response message sent by the second relay terminal and the link message corresponding to the link response message. Optionally, the first relay terminal determines, based on the link response message sent by the second terminal and the link message corresponding to the link response message, the identifier, included in the link response message generated by the first relay terminal, of the first terminal receiving the link response message, and further determines the link response message generated by the first relay terminal.

S58: The relay terminal sends a link response message to the first terminal or another relay terminal based on the terminal identifier included in the link response message sent by the second terminal or another relay terminal and the identifier of the relay terminal receiving the link response message.

In this embodiment, the relay terminal sends the regenerated link response message to the first terminal or another relay terminal based on the terminal identifier in the link response message and the identifier of the relay terminal receiving the link response message. For this process, refer to the process in which the second terminal sends the link response message to the relay terminal corresponding to the link response message as described in step S56. Optionally, the relay terminal may determine, based on the identifier of the relay terminal receiving the regenerated link response message, the layer-2 address of the relay terminal receiving the regenerated link response message, and may further send, to the first terminal or another relay terminal based on the layer-2 address of the relay terminal receiving the regenerated link response message, the link response message regenerated by the relay terminal.

Examples are given below.

S58a: The third relay terminal sends a link response message to the second relay terminal based on the terminal identifier included in the link response message sent by the second terminal and the identifier of the relay terminal receiving the link response message sent by the third relay terminal. As described in step S57b, the link response message sent by the third relay terminal includes the terminal identifier, the identifier of the third relay terminal, and the identifier of the second relay terminal. Optionally, the third relay terminal sends the link response message to the second relay terminal based on the terminal identifier included in the link response message and the identifier of the second relay terminal receiving the link response message. Specifically, the third relay terminal may determine the layer-2 address of the second relay terminal based on the identifier of the second relay terminal receiving the link response message, and may further send, to the second relay terminal based on the layer-2 address of the second relay terminal, the link response message regenerated by the third relay terminal.

S58b: The second relay terminal sends a link response message to the first relay terminal based on the terminal identifier included in the link response message sent by the third relay terminal and the identifier of the relay terminal receiving the link response message. As described in step S57c, the link response message sent by the second relay terminal includes the terminal identifier, the identifier of the second relay terminal, and the identifier of the first relay terminal. Optionally, the second relay terminal sends the link response message to the first relay terminal based on the terminal identifier included in the link response message and the identifier of the first relay terminal receiving the link response message. Specifically, the second relay terminal may determine the layer-2 address of the first relay terminal based on the identifier of the first relay terminal receiving the link response message, and may further send, to the first relay terminal based on the layer-2 address of the first relay terminal, the link response message regenerated by the second relay terminal.

S58c: The first relay terminal sends a link response message to the first terminal based on the terminal identifier included in the link response message sent by the second relay terminal and the identifier of the relay terminal receiving the link response message. As described in step S57, the link response message sent by the first relay terminal includes the terminal identifier, the identifier of the first relay terminal, and the identifier of the first terminal. Optionally, the first relay terminal sends the link response message to the first terminal based on the terminal identifier included in the link response message and the identifier of the first terminal receiving the link response message. Specifically, the first relay terminal may determine the layer-2 address of the first terminal based on the identifier of the first terminal receiving the link response message, and may further send, to the first terminal based on the layer-2 address of the first terminal, the link response message regenerated by the first relay terminal.

S59: The first terminal receives the link response message sent by the first relay terminal.

The link response message is the response message to the link message. In this embodiment, for a process in which the first terminal receives the link response message sent by the first relay terminal, refer to the process in which the relay terminal sends the link response message to the first terminal or another relay terminal based on the terminal identifier included in the link response message and the identifier of the relay terminal receiving the link response message as described in step S58. Optionally, the first terminal receives the link response message sent by the first relay terminal based on the layer-2 address of the first terminal.

In this embodiment, the link message includes the terminal identifier and the second indication information. The second indication information is the first indication information in the discovery response message sent by the first relay terminal. In a process in which the first terminal sends the link message to the first relay terminal and the relay terminal sends the link message to another relay terminal or the second terminal, the relay terminal or the second terminal to which the link message is to be sent is determined based on the second indication information in the link message, so that accuracy of relay link establishment is improved, signaling overhead in the link establishment process is reduced, and quality of relay communication is further enhanced.

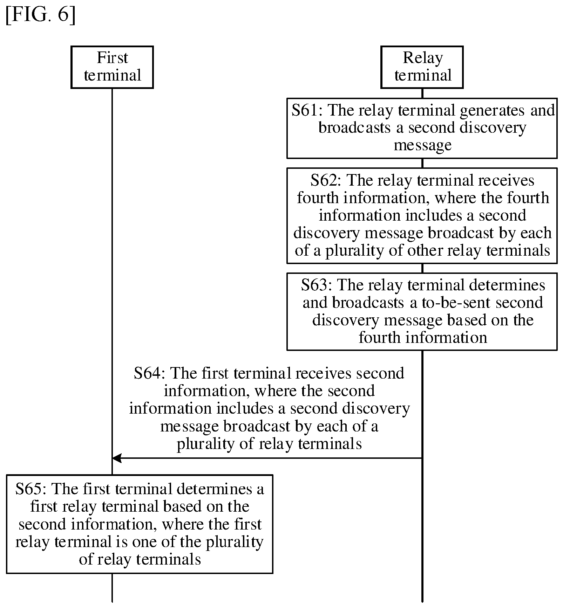

FIG. 6 is a signaling diagram of another relay link establishment method according to an embodiment of this application. As shown in FIG. 6, the method includes the following steps.

S61: A relay terminal generates and broadcasts a second discovery message.

The second discovery message is used by a first terminal to discover a second terminal. The second discovery message includes fourth indication information and second discovery information. The fourth indication information indicates relay terminals through which the second discovery information passes. The second discovery information includes a terminal identifier and a relay service code. For descriptions of the terminal identifier and the relay service code, refer to the descriptions in step S101. Details are not described in this embodiment again. The second discovery information is from the second terminal. Therefore, the relay terminals through which the second discovery information passes and that are indicated by the fourth indication information are all relay terminals through which the first terminal discovers the second terminal.

In this embodiment, the second discovery message is a discovery message generated by a relay terminal to enable the first terminal to discover the second terminal. The relay terminal generating the second discovery message is a relay terminal that has discovered the second terminal in another relay discovery or relay link establishment process. Optionally, the relay terminal may obtain the second discovery information from the discovered second terminal, determine the fourth indication information based on relay terminals through which the second discovery information passes from the second terminal to the relay terminal, and further generate the second discovery message.

In this embodiment, after generating the second discovery message, the relay terminal may broadcast the generated second discovery message, so that the first terminal discovers the second terminal. The second discovery information included in the second discovery message does not change with broadcasting of the second discovery message, and the fourth indication information included in the second discovery message is updated with broadcasting of the second discovery message. To be specific, the fourth indication information indicates the relay terminals that are passed through from the second terminal to the relay terminal generating the second discovery message, and relay terminals that are passed through in a broadcasting process.

S62: The relay terminal receives fourth information, where the fourth information includes a second discovery message broadcast by each of a plurality of other relay terminals.

In this embodiment, the other relay terminals include the relay terminal generating the second discovery message, and/or other relay terminals that broadcast the second discovery message. The second discovery messages broadcast by the different relay terminals and included in the fourth information include the same second discovery information and different fourth indication information. For example, if the second discovery message is the discovery message broadcast by the relay terminal generating the second discovery message, the fourth indication information indicates the relay terminals that are passed through from the second terminal to the relay terminal generating the second discovery message; or if the second discovery message is a discovery message broadcast by another relay terminal broadcasting the second discovery message, the fourth indication information indicates the relay terminals that are passed through from the second terminal to the relay terminal generating the second discovery message, and relay terminals that are passed through in a broadcasting process.

S63: The relay terminal determines and broadcasts a to-be-sent second discovery message based on the fourth information.

In this embodiment, after receiving the fourth information, the relay terminal may determine and broadcast the to-be-sent second discovery message based on the fourth information. A process of determining and broadcasting the to-be-sent second discovery message based on the fourth information is not limited in this application.

Optionally, determining and broadcasting the to-be-sent second discovery message based on the fourth information may include: determining and broadcasting the to-be-sent second discovery message based on the fourth indication information.

In an example, the to-be-sent second discovery message may be determined based on the fourth indication information included in the fourth information. Specifically, based on the fourth indication information in each second discovery message, a number of relay terminals indicated by the fourth indication information in the second discovery message may be determined. Then, a second discovery message corresponding to fourth indication information indicating relay terminals whose number is the smallest or indicating relay terminals whose number is less than a preset number threshold may be determined as the to-be-sent second discovery message. The to-be-sent second discovery message is determined based on the number of relay terminals indicated by the fourth indication information, so that radio resources for relay link establishment and relay communication can be saved.

In an example, the to-be-sent second discovery message may be determined based on the fourth indication information included in the fourth information. Specifically, based on the fourth indication information in each second discovery message, a second discovery message corresponding to fourth indication information indicating relay terminals that do not include the current relay terminal may be determined as the to-be-sent second discovery message. The to-be-sent second discovery message is determined based on a number of relay terminals indicated by the fourth indication information, so that a loop phenomenon and a broadcast storm phenomenon in a relay discovery process can be avoided, relay link establishment efficiency is improved, and radio resources for relay link establishment are saved.

In an example, the to-be-sent second discovery message may be determined based on the fourth indication information included in the fourth information. Specifically, historical fourth indication information of the current relay terminal may be obtained first. The historical fourth indication information indicates relay terminals that discover the second terminal in a historical relay discovery or relay link establishment process. A second discovery message corresponding to fourth indication information indicating relay terminals whose number is less than a number of relay terminals indicated by the historical fourth indication information is determined as the to-be-sent second discovery message. The to-be-sent second discovery message is determined based on the number of relay terminals indicated by the fourth indication information, so that radio resources for relay link establishment and relay communication can be saved.

Optionally, the relay terminal may determine and broadcast the to-be-sent second discovery message based on one or more of the manners of determining the to-be-sent second discovery message indicated by the fourth indication information included in the fourth information as described in the foregoing examples.

Optionally, the second discovery message further includes second hop count information; and/or the fourth information further includes signal quality of the second discovery message, where the second hop count information is used to limit a maximum number of hops for transmission of the second discovery information. In an example, the second hop count information is a value of a time to live of the second discovery message. For descriptions of the time to live, refer to the descriptions in step S41. Details are not described in this step again. Specifically, if the value of the time to live TTL is not decreased to 0, a number of hops for transmission of the second discovery information does not reach the maximum number of hops. In an example, the second hop count information is a maximum hop count value, and the maximum hop count value needs to be combined with the fourth indication information included in the second discovery message to limit the maximum number of hops for transmission of the second discovery information. For example, if a number of relay terminals indicated by the fourth indication information is less than the maximum hop count value, the number of hops for transmission of the second discovery information does not reach the maximum number of hops.

Optionally, determining and broadcasting the to-be-sent second discovery message based on the fourth information includes: determining and broadcasting the to-be-sent second discovery message based on the fourth indication information and one or more of the second hop count information in the fourth information and the signal quality of the second discovery message.

In an example, the to-be-sent second discovery message may be determined based on the fourth indication information included in the fourth information and the second hop count information. Specifically, the to-be-sent second discovery message may be determined and broadcast based on one or more of the manners of determining the to-be-sent second discovery message indicated by the fourth indication information included in the fourth information as described in the foregoing examples. In addition, a second discovery message in which second discovery information does not reach the maximum number of hops may be selected based on the second hop count information. A second discovery message that meets both selection conditions is determined as the to-be-sent second discovery message.

In an example, the to-be-sent second discovery message may be determined based on the fourth indication information included in the fourth information and the signal quality of the second discovery message. After the second discovery message broadcast by another relay terminal is received, the signal quality of the second discovery message may be obtained. Specifically, based on the signal quality of each second discovery message, a second discovery message whose signal quality is greater than a preset signal quality threshold may be selected. In addition, the to-be-sent second discovery message may be determined and broadcast based on one or more of the manners of determining the to-be-sent second discovery message indicated by the fourth indication information included in the fourth information as described in the foregoing examples. A second discovery message that meets both selection conditions is determined as the to-be-sent second discovery message.

In an example, the to-be-sent second discovery message may be determined based on the fourth indication information included in the fourth information, the second hop count information, and the signal quality of the second discovery message. Specifically, the to-be-sent second discovery message may be determined and broadcast based on one or more of the manners of determining the to-be-sent second discovery message indicated by the fourth indication information included in the fourth information as described in the foregoing examples. In addition, a second discovery message whose second discovery information does not reach the maximum number of hops may be selected based on the second hop count information. A second discovery message that meets all the three selection conditions is determined as the to-be-sent second discovery message.

S64: The first terminal receives second information, where the second information includes a second discovery message broadcast by each of a plurality of relay terminals.

The second discovery message is used by the first terminal to discover the second terminal. The second discovery message is from the relay terminal. The second discovery message includes fourth indication information and the second discovery information. The fourth indication information indicates relay terminals through which the second discovery information passes. The second discovery information includes the terminal identifier and the relay service code. The second discovery information is from the second terminal.

In this embodiment, the plurality of relay terminals include the relay terminal generating the second discovery messages and/or relay terminals broadcasting the second discovery messages. The second discovery messages broadcast by the different relay terminals and included in the second information include the same second discovery information and different fourth indication information. For example, if the second discovery message is the discovery message broadcast by the relay terminal generating the second discovery message, the fourth indication information indicates the relay terminals that are passed through from the second terminal to the relay terminal generating the second discovery message; or if the second discovery message is a discovery message broadcast by a relay terminal broadcasting the second discovery message, the fourth indication information indicates the relay terminals that are passed through from the second terminal to the relay terminal generating the second discovery message, and relay terminals that are passed through in a broadcasting process.

S65: The first terminal determines a first relay terminal based on the second information, where the first relay terminal is one of the plurality of relay terminals.

In this embodiment, after receiving the second information, the first terminal may determine the first relay terminal based on the second information. A process of determining the first relay terminal based on the second information is not limited in this application. Optionally, determining the first relay terminal based on the second information may include: determining the first relay terminal based on the fourth indication information in the second information.

In an example, the first relay terminal may be determined based on the fourth indication information included in the second information. Specifically, based on the fourth indication information in each second discovery message, a number of relay terminals indicated by the fourth indication information in the second discovery message may be determined, and then a second discovery message corresponding to fourth indication information indicating relay terminals whose number is the smallest or indicating relay terminals whose number is less than a preset number threshold is selected as a selection condition for the first relay terminal. Specifically, a relay terminal that sends a second discovery message that meets the selection condition may be determined as the first relay terminal. The first relay terminal is determined based on the number of relay terminals indicated by the fourth indication information, so that radio resources for relay link establishment and relay communication can be saved.

Optionally, the second discovery message further includes second hop count information; and/or the second information further includes signal quality of the second discovery message, where the second hop count information is used to limit a maximum number of hops for transmission of the second discovery information. For descriptions of the second hop count information, refer to the descriptions in step S63. Details are not described in this step again.

Optionally, determining the first relay terminal based on the second information includes: determining the first relay terminal based on the fourth indication information and one or more of the second hop count information in the second information, the signal quality of the second discovery message, and preset third indication information, where the preset third indication information indicates a relay terminal that the first terminal expects to select.

In an example, the first terminal may be determined based on the second hop count information in the second information, the fourth indication information, the signal quality of the second discovery message, and preset third indication information. Specifically, based on the second hop count information, a second discovery message in which second discovery information does not reach the maximum number of hops may be selected. In addition, the to-be-sent second discovery message may be determined and broadcast based on one or more of the manners of determining the to-be-sent second discovery message indicated by the fourth indication information included in the fourth information as described in the foregoing examples. In addition, after the second discovery message broadcast by another relay terminal is received, the signal quality of the second discovery message may be obtained. Specifically, based on the signal quality of each second discovery message, a second discovery message whose signal quality is greater than a preset signal quality threshold may be selected. In addition, based on the fourth indication information in the second information, a discovery response message corresponding to fourth indication information indicating relay terminals that include the relay terminal that the first terminal expects to select, as indicated by the preset third indication information, may be selected. A relay terminal that sends a discovery response message that meets all the foregoing four selection conditions is determined as the first relay terminal.

In an example, the first terminal may be determined based on the fourth indication information in the second information, the signal quality of the second discovery message, and the preset third indication information. For a specific process, refer to the descriptions in the foregoing examples. Details are not described herein again. In an example, the first terminal may be determined based on the second hop count information in the second information, the fourth indication information, and the preset third indication information. For a specific process, refer to the descriptions in the foregoing examples. Details are not described herein again. In an example, the first terminal may be determined based on the second hop count information in the second information, the fourth indication information, and the signal quality of the second discovery message. For a specific process, refer to the descriptions in the foregoing examples. Details are not described herein again. In an example, the first terminal may be determined based on the fourth indication information in the second information and the preset third indication information. For a specific process, refer to the descriptions in the foregoing examples. Details are not described herein again. In an example, the first terminal may be determined based on the second hop count information in the second information and the fourth indication information. For a specific process, refer to the descriptions in the foregoing examples. Details are not described herein again. In an example, the first terminal may be determined based on the fourth indication information in the second information and the signal quality of the second discovery message. For a specific process, refer to the descriptions in the foregoing examples. Details are not described herein again.

In this embodiment, the terminal identifier includes an identifier of the first terminal and an identifier of the second terminal, or the terminal identifier includes an identifier of the first terminal. Specifically, in U2U communication, the terminal identifier includes the identifier of the first terminal and the identifier of the second terminal; and in U2N communication, the terminal identifier includes the identifier of the first terminal.

In this embodiment, in step S63, the relay terminal determines and broadcasts the to-be-sent second discovery message based on the fourth information, where the to-be-sent second discovery message is determined based on the number of relay terminals indicated by the fourth indication information, so that radio resources for relay link establishment and relay communication can be saved. The to-be-sent second discovery message is determined based on a number of relay terminals indicated by the fourth indication information, so that a loop phenomenon and a broadcast storm phenomenon in a relay discovery process can be avoided, relay link establishment efficiency is improved, and radio resources for relay link establishment are saved. In step S65, the first terminal determines the first relay terminal based on the second information, where the first relay terminal is one of the plurality of relay terminals. The first relay terminal is determined based on the number of relay terminals indicated by the fourth indication information, so that radio resources for relay link establishment and relay communication can be saved.

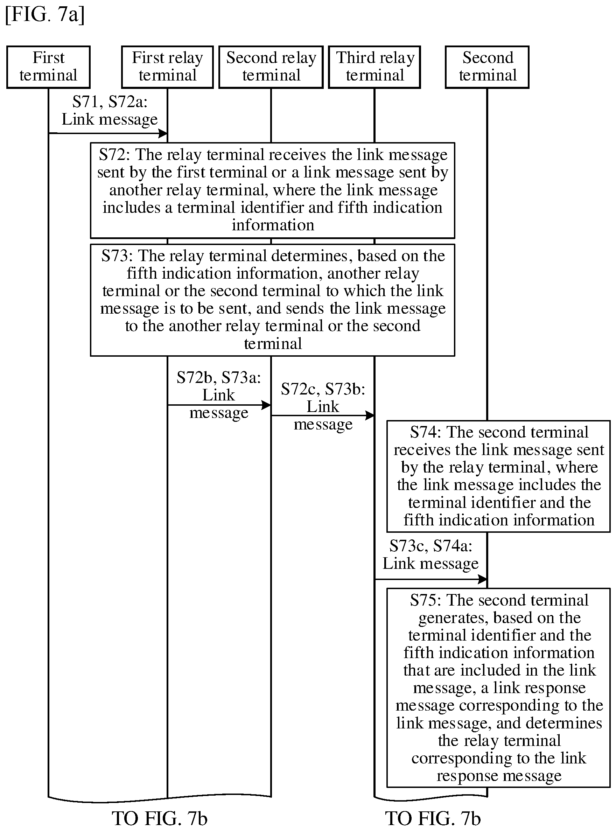

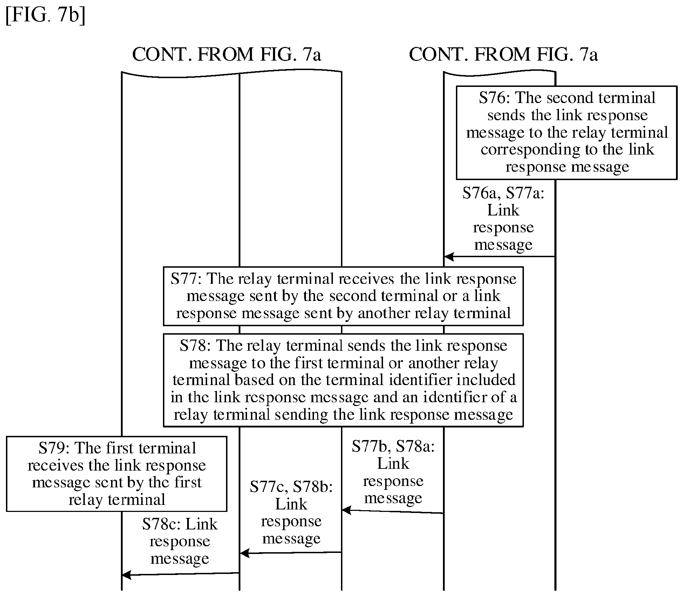

FIG. 7a and FIG. 7b are a signaling diagram of another relay link establishment method according to an embodiment of this application. As shown in FIG. 7a and FIG. 7b, the method includes the following steps.

S71: A first terminal sends a link message to a first relay terminal.

The link message includes a terminal identifier and fifth indication information, and the fifth indication information is fourth indication information in a second discovery message sent by the first relay terminal. For example, in the scenario shown in FIG. 1, identifiers of relay terminals indicated by the fourth indication information are an identifier of the first relay terminal, an identifier of the second relay terminal, and an identifier of the third relay terminal. For example, in the scenario shown in FIG. 2, identifiers of relay terminals indicated by the fourth indication information are an identifier of the first relay terminal, an identifier of the second relay terminal, an identifier of the third relay terminal, and an identifier of the second terminal.

In this embodiment, after the first terminal determines the first relay terminal based on the second information as described in step S65, the first terminal sends the link message to the first relay terminal. A process in which the first terminal sends the link message to the first relay terminal is not limited in this application. Optionally, an identifier of the first relay terminal may be determined based on the fifth indication information included in the link message; then, a layer-2 address of the first relay terminal is determined based on an association relationship between the identifier of the first relay terminal and the layer-2 address of the first relay terminal; and finally, the link message is sent to the first relay terminal based on a layer-2 address of the first relay terminal.

S72: The relay terminal receives the link message sent by the first terminal or a link message sent by another relay terminal.

The link message includes the terminal identifier and the fifth indication information. The fifth indication information is the fourth indication information in the second discovery message sent by the first relay terminal.

Examples are given below.

S72a: The first relay terminal receives the link message sent by the first terminal. For the process in which the first terminal sends the link message to the first relay terminal, refer to the descriptions in step S71. Details are not described in this step again.

S72b: A second relay terminal receives the link message sent by the first relay terminal.

S72c: A third relay terminal receives the link message sent by the second relay terminal.

S73: The relay terminal determines, based on the fifth indication information, another relay terminal or a second terminal to which the link message is to be sent, and sends the link message to the another relay terminal or the second terminal.

In this embodiment, the relay terminal determines, based on an identifier of the relay terminal, namely, the relay terminal sending the link message, and the fifth indication information, an identifier of the relay terminal receiving the link message, and may further send, based on the identifier of the relay terminal receiving the link message, the link message to the relay terminal receiving the link message.

In an example, in the scenario shown in FIG. 1, fifth indication information is the identifier of the first relay terminal, the identifier of the second relay terminal, and the identifier of the third relay terminal. Alternatively, in the scenario shown in FIG. 2, fifth indication information is the identifier of the first relay terminal, the identifier of the second relay terminal, the identifier of the third relay terminal, and the identifier of the second terminal.

A process in which the relay terminal determines, based on the fifth indication information, the another relay terminal or the second terminal to which the link message is to be sent, and sends the link message to the another relay terminal or the second terminal is not limited in this application.

Optionally, determining, based on the fifth indication information, the another relay terminal or the second terminal to which the link message is to be sent, and sending the link message to the another relay terminal or the second terminal may include:

If it is determined, based on the fifth indication information, that the link message is to be sent to the another relay terminal, the link message is unicast to the another relay terminal. Specifically, the relay terminal determines, based on the identifier of the relay terminal, namely, the relay terminal sending the link message, and the fifth indication information, the identifier of the relay terminal receiving the link message. If the identifier of the relay terminal receiving the link message corresponds to the another relay terminal, a layer-2 address of the relay terminal receiving the link message may be determined based on the identifier of the relay terminal receiving the link message. Further, a link address is unicast, based on the layer-2 address of the relay terminal receiving the link message, to the relay terminal receiving the link message. For example, in the scenario shown in FIG. 1, or in the scenario shown in FIG. 2, another relay terminal includes one of the first relay terminal, the second relay terminal, and the third relay terminal.

If it is determined, based on the fifth indication information, that the link message is to be sent to the second terminal, the link message is sent to the second terminal based on a type of the second terminal. Specifically, the relay terminal determines, based on the identifier of the relay terminal, namely, the relay terminal sending the link message, and the fifth indication information, the identifier of the relay terminal receiving the link message. If the identifier of the relay terminal receiving the link message corresponds to the second terminal, the link message may be sent to the second terminal based on the type of the second terminal. The type of the second terminal includes a relay device and a terminal device. For example, in the scenario shown in FIG. 1, a type of the second terminal is a terminal device. In the scenario shown in FIG. 2, a type of the second terminal is a relay device. A process of sending the link message to the second terminal based on the type of the second terminal is not limited in this application. Optionally, sending the link message to the second terminal based on the type of the second terminal may include:

If the type of the second terminal is the relay device, the link message is unicast to the second terminal. Specifically, if the type of the second terminal is the relay device, a layer-2 address of the second terminal may be determined based on an association relationship between an identifier of the second terminal and the layer-2 address of the second terminal. Further, the link message may be unicast to the second terminal based on the layer-2 address of the second terminal. If the type of the second terminal is the terminal device, the link message is broadcast. Specifically, if the type of the second terminal is the terminal device, when the association relationship between the identifier of the second terminal and the layer-2 address of the second terminal cannot be obtained, the link message may be broadcast, so that the second terminal receives the link message broadcast by the relay terminal.

Examples are given below.

S73a: The first relay terminal determines, based on the fifth indication information, that the link message is to be sent to the second relay terminal, and sends the link message to the second relay terminal. Specifically, the first relay terminal determines, based on the identifier of the first relay terminal and the fifth indication information, that the identifier of the relay terminal receiving the link message is an identifier of the second relay terminal, and may further determine a layer-2 address of the second relay terminal based on an association relationship between the identifier of the second relay terminal and the layer-2 address of the second relay terminal, and then send the link message to the second relay terminal based on the layer-2 address of the second relay terminal.

S73b: The second relay terminal determines, based on the fifth indication information, that the link message is to be sent to the third relay terminal, and sends the link message to the third relay terminal. Specifically, the second relay terminal determines, based on the identifier of the second relay terminal and the fifth indication information, that the identifier of the relay terminal receiving the link message is an identifier of the third relay terminal, and may further determine a layer-2 address of the third relay terminal based on an association relationship between the identifier of the third relay terminal and the layer-2 address of the third relay terminal, and then send the link message to the third relay terminal based on the layer-2 address of the third relay terminal.

S73c: The third relay terminal determines, based on the fifth indication information, that the link message is to be sent to the second terminal, and sends the link message to the second terminal. Specifically, in the scenario shown in FIG. 1, the third relay terminal determines, based on the identifier of the third relay terminal and the fifth indication information, that the third relay terminal is the last relay terminal, and a link message is to be sent to the second terminal. In this case, an association relationship between the identifier of the second terminal and a layer-2 address of the second terminal cannot be obtained. Optionally, the third relay terminal may broadcast the link message, so that the second terminal receives the link message broadcast by the third relay terminal. In the scenario shown in FIG. 2, the third relay terminal determines, based on the identifier of the third relay terminal and the fifth indication information, that an identifier of a relay terminal receiving a link message is the identifier of the second terminal, and may further determine a layer-2 address of the second terminal based on an association relationship between the identifier of the second terminal and the layer-2 address of the second terminal, and then send the link message to the second terminal based on the layer-2 address of the second terminal.

S74: The second terminal receives the link message sent by the relay terminal, where the link message includes the terminal identifier and the fifth indication information.

The fifth indication information is the fourth indication information in the second discovery message sent by the first relay terminal. The first relay terminal is a relay terminal determined based on second information. The second information is information that is received by the first terminal and that includes a second discovery message sent by each of a plurality of relay terminals.

In this embodiment, after the relay terminal determines, based on the fifth indication information, the another relay terminal or the second terminal to which the link message is to be sent, and sends the link message to the another relay terminal or the second terminal, the second terminal receives the link message sent by the relay terminal. Specifically, in the scenario shown in FIG. 1, the second terminal receives the link message sent by the relay terminal based on the layer-2 address of the second terminal. In the scenario shown in FIG. 2, the second terminal receives the link message broadcast by the relay terminal.

An example is given below.

S74a: The second terminal receives the link message sent by the third relay terminal, where the link message includes the terminal identifier and the fifth indication information. Specifically, in the scenario shown in FIG. 1, the second terminal receives the link message sent by the third relay terminal based on the layer-2 address of the second terminal. In the scenario shown in FIG. 2, the second terminal receives the link message broadcast by the third relay terminal.

S75: The second terminal generates, based on the terminal identifier and the fifth indication information that are included in the link message, a link response message corresponding to the link message, and determines the relay terminal corresponding to the link response message.

Optionally, the link response message includes the terminal identifier, an identifier of the second terminal or a relay terminal that sends the link response message, and an identifier of a relay terminal or the first terminal that receives the link response message.

In this embodiment, the second terminal may generate, based on the terminal identifier and the fifth indication information that are included in the link message, the link response message corresponding to the link message. The link response message corresponding to the link message and generated by the second terminal includes the terminal identifier, the identifier of the second terminal, and the identifier of the relay terminal receiving the link response message. The relay terminal corresponding to the identifier of the relay terminal receiving the link response message is determined as the relay terminal corresponding to the link response message.

An example is given below.

S75a: The second terminal generates, based on the terminal identifier and the fifth indication information that are included in the link message, the link response message corresponding to the link message, and determines the third relay terminal corresponding to the link response message. The link response message generated by the second terminal includes the terminal identifier, the identifier of the second terminal, and the identifier of the third relay terminal.

S76: The second terminal sends the link response message to the relay terminal corresponding to the link response message.

In this embodiment, after the second terminal generates, based on the terminal identifier and the fifth indication information that are included in the link message, the link response message corresponding to the link message, and determines the relay terminal corresponding to the link response message, the second terminal may send the link response message to the relay terminal corresponding to the link response message. A process in which the second terminal sends the link response message to the relay terminal corresponding to the link response message is not limited in this application. Optionally, the layer-2 address of the relay terminal corresponding to the link response message may be determined based on the association relationship between the identifier of the relay terminal corresponding to the link response message, namely, the relay terminal receiving the link response message, and the layer-2 address of the relay terminal corresponding to the link response message. Further, the second terminal may send, based on the layer-2 address of the relay terminal corresponding to the link response message, the link response message to the relay terminal corresponding to the link response message.

An example is given below.

S76a: The second terminal sends the link response message to the third relay terminal corresponding to the link response message. Specifically, the second terminal may determine, based on the association relationship between the identifier of the relay terminal corresponding to the link response message, namely, the third relay terminal, and the layer-2 address of the third relay terminal, the layer-2 address of the third relay terminal corresponding to the link response message. Further, the second terminal may send the link response message to the third relay terminal based on the layer-2 address of the third relay terminal.

S77: The relay terminal receives the link response message sent by the second terminal or a link response message sent by another relay terminal.

The link response message is a response message to the link message, and the link response message includes the terminal identifier and an identifier of the relay terminal sending the link response message.

In this embodiment, for a process in which the relay terminal receives the link response message sent by the second terminal or another relay terminal, refer to the process in which the second terminal sends the link response message to the relay terminal corresponding to the link response message as described in step S76. Optionally, the relay terminal may receive the link response message sent by the second terminal or another relay terminal based on a layer-2 address of the relay terminal. In an example, if the link response message received by the relay terminal includes the identifier of the second terminal sending the link response message, the link response message received by the relay terminal is the link response message sent by the second terminal.

In an example, if the link response message received by the relay terminal includes the identifier of the another relay terminal sending the link response message, the link response message received by the relay terminal is a link response message sent by the another relay terminal. In this embodiment, the link response message sent by the another relay terminal is a link response message regenerated based on the link response message sent by the second terminal. A process of regenerating the link response message is not limited in this application. Optionally, a link message corresponding to the link response message received by the relay terminal may be determined based on the terminal identifier, the identifier of the second terminal sending the link response message, and the identifier of the relay terminal receiving the link response message that are included in the link response message sent by the second terminal; and based on the fifth indication information included in the link response message, the identifier, included in the regenerated link response message, of the first terminal or the relay terminal receiving the link response message is determined, and the link response message is further regenerated.

Examples are given below.

S77a: The third relay terminal receives the link response message sent by the second terminal. The link response message sent by the second terminal includes the terminal identifier, the identifier of the second terminal, and the identifier of the third relay terminal. In an example, the third relay terminal regenerates a link response message based on the link response message sent by the second terminal and the link message corresponding to the link response message. Optionally, the third relay terminal determines, based on the link response message sent by the second terminal and the link message corresponding to the link response message, the identifier, included in the link response message generated by the third relay terminal, of the second relay terminal receiving the link response message, and further determines the link response message generated by the third relay terminal.

S77b: The second relay terminal receives the link response message sent by the third relay terminal. The link response message sent by the third relay terminal includes the terminal identifier, the identifier of the third relay terminal, and the identifier of the second relay terminal. In an example, the second relay terminal regenerates a link response message based on the link response message sent by the third relay terminal and the link message corresponding to the link response message. Optionally, the second relay terminal determines, based on the link response message sent by the third relay terminal and the link message corresponding to the link response message, the identifier, included in the link response message generated by the second relay terminal, of the first relay terminal receiving the link response message, and further determines the link response message generated by the second relay terminal.

S77c: The first relay terminal receives the link response message sent by the second relay terminal. The link response message sent by the second relay terminal includes the terminal identifier, the identifier of the second terminal, and the identifier of the first relay terminal. In an example, the first relay terminal regenerates a link response message based on the link response message sent by the second relay terminal and the link message corresponding to the link response message. Optionally, the first relay terminal determines, based on the link response message sent by the second terminal and the link message corresponding to the link response message, the identifier, included in the link response message generated by the first relay terminal, of the first terminal receiving the link response message, and further determines the link response message generated by the first relay terminal.

S78: The relay terminal sends the link response message to the first terminal or another relay terminal based on the terminal identifier in the link response message and the identifier of the relay terminal sending the link response message.

In this embodiment, the relay terminal sends the regenerated link response message to the first terminal or another relay terminal based on the terminal identifier in the link response message and the identifier of the relay terminal sending the link response message. For this process, refer to the process in which the second terminal sends the link response message to the relay terminal corresponding to the link response message as described in step S76. Optionally, the relay terminal may determine, based on the identifier of the relay terminal receiving the link response message, the layer-2 address of the relay terminal receiving the link response message, and may further send, to the first terminal or another relay terminal based on the layer-2 address of the relay terminal receiving the link response message, the link response message regenerated by the relay terminal.

Examples are given below.

S78a: The third relay terminal sends the link response message to the second relay terminal based on the terminal identifier included in the link response message and the identifier of the relay terminal receiving the link response message. As described in step S77b, the link response message sent by the third relay terminal includes the terminal identifier, the identifier of the third relay terminal, and the identifier of the second relay terminal. Optionally, the third relay terminal sends the link response message to the second relay terminal based on the terminal identifier included in the link response message and the identifier of the second relay terminal receiving the link response message. Specifically, the third relay terminal may determine the layer-2 address of the second relay terminal based on the identifier of the second relay terminal receiving the link response message, and may further send, to the second relay terminal based on the layer-2 address of the second relay terminal, the link response message regenerated by the third relay terminal.

S78b: The second relay terminal sends the link response message to the first relay terminal based on the terminal identifier included in the link response message and the identifier of the relay terminal receiving the link response message. As described in step S77c, the link response message sent by the second relay terminal includes the terminal identifier, the identifier of the second relay terminal, and the identifier of the first relay terminal. Optionally, the second relay terminal sends the link response message to the first relay terminal based on the terminal identifier included in the link response message and the identifier of the first relay terminal receiving the link response message. Specifically, the second relay terminal may determine the layer-2 address of the first relay terminal based on the identifier of the first relay terminal receiving the link response message, and may further send, to the first relay terminal based on the layer-2 address of the first relay terminal, the link response message regenerated by the second relay terminal.

S78c: The first relay terminal sends the link response message to the first terminal based on the terminal identifier included in the link response message and the identifier of the relay terminal receiving the link response message. As described in step S77, the link response message sent by the first relay terminal includes the terminal identifier, the identifier of the first relay terminal, and the identifier of the first terminal. Optionally, the first relay terminal sends the link response message to the first terminal based on the terminal identifier included in the link response message and the identifier of the first terminal receiving the link response message. Specifically, the first relay terminal may determine the layer-2 address of the first terminal based on the identifier of the first terminal receiving the link response message, and may further send, to the first terminal based on the layer-2 address of the first terminal, the link response message regenerated by the first relay terminal.

S79: The first terminal receives the link response message sent by the first relay terminal.

The link response message is the response message to the link message. In this embodiment, for a process in which the first terminal receives the link response message sent by the first relay terminal, refer to the process in which the relay terminal sends the link response message to the first terminal or another relay terminal based on the terminal identifier included in the link response message and the identifier of the relay terminal receiving the link response message as described in step S78. Optionally, the first terminal receives the link response message sent by the first relay terminal based on the layer-2 address of the first terminal.

In this embodiment, the terminal identifier includes an identifier of the first terminal and an identifier of the second terminal, or the terminal identifier includes an identifier of the first terminal. Specifically, in U2U communication, the terminal identifier includes the identifier of the first terminal and the identifier of the second terminal; and in U2N communication, the terminal identifier includes the identifier of the first terminal.

In this embodiment, the link message includes the terminal identifier and the fifth indication information. The fifth indication information is the fourth indication information in the second discovery message sent by the first relay terminal. In a process in which the first terminal sends the link message to the first relay terminal and the relay terminal sends the link message to another relay terminal or the second terminal, the relay terminal or the second terminal to which the link message is to be sent is determined based on the fifth indication information in the link message, so that accuracy of relay link establishment is improved, signaling overhead in the link establishment process is reduced, and quality of relay communication is further enhanced.

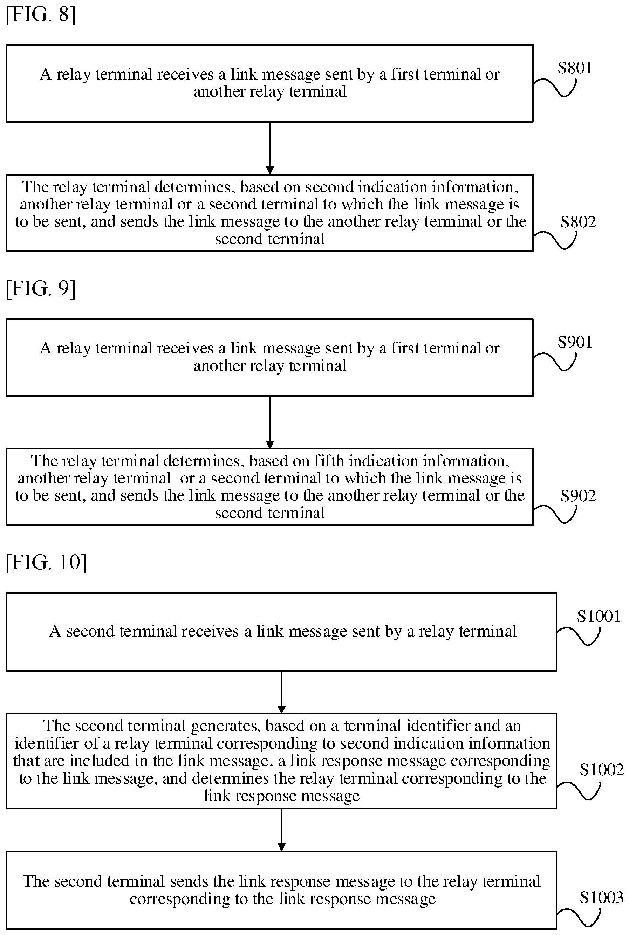

FIG. 8 is a flowchart of another relay link establishment method according to an embodiment of this application. As shown in FIG. 8, the relay link establishment method according to this embodiment of this application is performed by a relay terminal. The method includes the following steps.

S801: The relay terminal receives a link message sent by a first terminal or another relay terminal.

The link message includes a terminal identifier and second indication information. The second indication information is first indication information in a discovery response message sent by a first relay terminal. The first relay terminal is a relay terminal determined based on first information. The first information is information that is received by the first terminal and that includes a discovery response message sent by each of a plurality of relay terminals.

For a detailed description of this step, refer to the descriptions in step S52. Details are not described in this step again.

S802: The relay terminal determines, based on the second indication information, another relay terminal or a second terminal to which the link message is to be sent, and sends the link message to the another relay terminal or the second terminal.

For a detailed description of this step, refer to the descriptions in step S53. Details are not described in this step again.

In this embodiment, the link message includes the terminal identifier and the second indication information. The second indication information is the first indication information in the discovery response message sent by the first relay terminal. The relay terminal determines, based on the second indication information, the another relay terminal or the second terminal to which the link message is to be sent, and sends the link message to the another relay terminal or the second terminal, so that accuracy of relay link establishment is improved, signaling overhead in the link establishment process is reduced, and quality of relay communication is further enhanced.

FIG. 9 is a flowchart of another relay link establishment method according to an embodiment of this application. As shown in FIG. 9, the relay link establishment method according to this embodiment of this application is performed by a relay terminal. The method includes the following steps.

S901: The relay terminal receives a link message sent by a first terminal or another relay terminal.

The link message includes a terminal identifier and fifth indication information, and the fifth indication information is fourth indication information in a second discovery message sent by a first relay terminal.

For a detailed description of this step, refer to the descriptions in step S77. Details are not described in this step again.

S902: The relay terminal determines, based on the fifth indication information, another relay terminal or a second terminal to which the link message is to be sent, and sends the link message to the another relay terminal or the second terminal.

For a detailed description of this step, refer to the descriptions in step S78. Details are not described in this step again.

In this embodiment, the link message includes the terminal identifier and the fifth indication information. The fifth indication information is the fourth indication information in the second discovery message sent by the first relay terminal. The relay terminal determines, based on the fifth indication information, the another relay terminal or the second terminal to which the link message is to be sent, and sends the link message to the another relay terminal or the second terminal, so that accuracy of relay link establishment is improved, signaling overhead in the link establishment process is reduced, and quality of relay communication is further enhanced.

FIG. 10 is a flowchart of another relay link establishment method according to an embodiment of this application. As shown in FIG. 10, the relay link establishment method according to this embodiment of this application is performed by a second terminal. The method includes the following steps.

S1001: The second terminal receives a link message sent by a relay terminal.

The link message includes a terminal identifier and second indication information. The second indication information is first indication information in a discovery response message sent by a first relay terminal. The first relay terminal is a relay terminal determined based on first information. The first information is information that is received by a first terminal and that includes a discovery response message sent by each of a plurality of relay terminals.

For a detailed description of this step, refer to the descriptions in step S54. Details are not described in this step again.

S1002: The second terminal generates, based on the terminal identifier and the second indication information that are included in the link message, a link response message corresponding to the link message, and determines the relay terminal corresponding to the link response message.

For a detailed description of this step, refer to the descriptions in step S55. Details are not described in this step again.

S1003: The second terminal sends the link response message to the relay terminal corresponding to the link response message.

For a detailed description of this step, refer to the descriptions in step S56. Details are not described in this step again.

In this embodiment, the link message includes the terminal identifier and the second indication information. The second indication information is the first indication information in the discovery response message sent by the first relay terminal. The second terminal generates, based on the terminal identifier and the second indication information that are included in the link message, the link response message corresponding to the link message, and determines the relay terminal corresponding to the link response message, so that accuracy of relay link establishment is improved, signaling overhead in the link establishment process is reduced, and quality of relay communication is further enhanced.

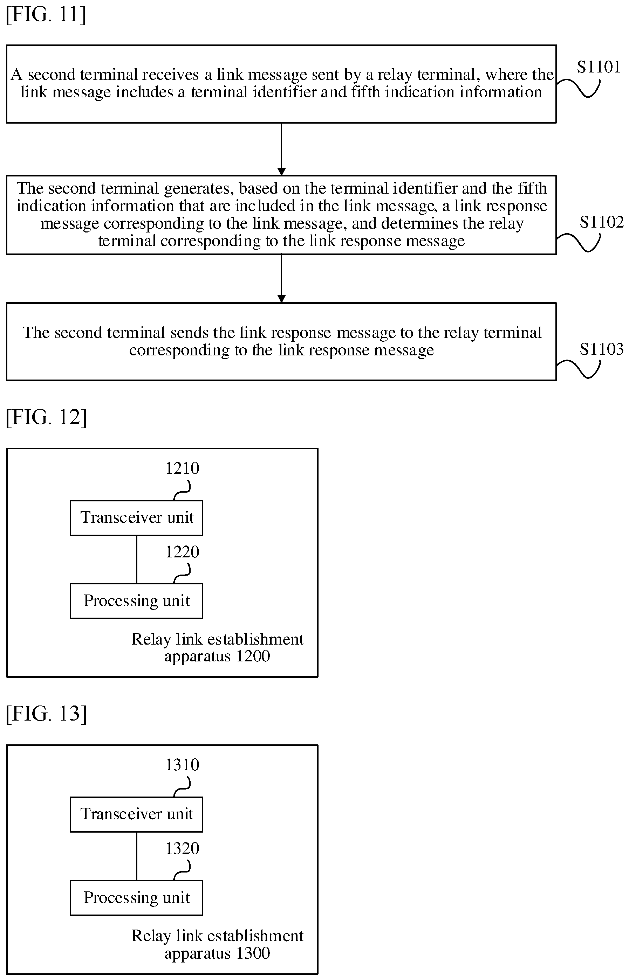

FIG. 11 is a flowchart of another relay link establishment method according to an embodiment of this application. As shown in FIG. 11, the relay link establishment method according to this embodiment of this application is performed by a second terminal. The method includes the following steps.

S1101: The second terminal receives a link message sent by a relay terminal, where the link message includes a terminal identifier and fifth indication information.

The fifth indication information is fourth indication information in a second discovery message sent by a first relay terminal. The first relay terminal is a relay terminal determined based on second information. The second information is information that is received by a first terminal and that includes a second discovery message sent by each of a plurality of relay terminals.

For a detailed description of this step, refer to the descriptions in step S74. Details are not described in this step again.

S1102: The second terminal generates, based on the terminal identifier and the fifth indication information that are included in the link message, a link response message corresponding to the link message, and determines the relay terminal corresponding to the link response message.

For a detailed description of this step, refer to the descriptions in step S75. Details are not described in this step again.

S1103: The second terminal sends the link response message to the relay terminal corresponding to the link response message.

For a detailed description of this step, refer to the descriptions in step S76. Details are not described in this step again.

In this embodiment, the link message includes the terminal identifier and the fifth indication information. The fifth indication information is the fourth indication information in the second discovery message sent by the first relay terminal. The second terminal generates, based on the terminal identifier and the fifth indication information that are included in the link message, the link response message corresponding to the link message, and determines the relay terminal corresponding to the link response message, so that accuracy of relay link establishment is improved, signaling overhead in the link establishment process is reduced, and quality of relay communication is further enhanced.

The foregoing describes in detail the methods provided in embodiments of this application with reference to the accompanying drawings. The following describes in detail apparatuses provided in embodiments of this application with reference to the accompanying drawings.

FIG. 12 to FIG. 14 are block diagrams of possible relay link establishment apparatuses according to embodiments of this application. These relay link establishment apparatuses may be configured to implement functions of the first terminal, the relay terminal, or the second terminal in the foregoing method embodiments, and therefore can also achieve beneficial effects of the foregoing method embodiments. In embodiments of this application, the relay link apparatus may be the first terminal, the relay terminal, or the second terminal in any one of the method embodiments shown in FIG. 3 to FIG. 11, may be a component (for example, a chip, a chip system, or a processor) configured in a terminal or a network device, or may be a logical module or software that can implement some or all functions of the terminal or the network device.

In an example, FIG. 12 is a block diagram of a relay link establishment apparatus 1200 on a first terminal side according to an embodiment of this application. As shown in FIG. 12, the relay link establishment apparatus 1200 includes a transceiver unit 1210 and a processing unit 1220.

In a possible design, the relay link establishment apparatus 1200 is configured to implement a function of the first terminal in any one of the method embodiments shown in FIG. 3 to FIG. 11. For more detailed descriptions of the transceiver unit 1210 and the processing unit 1220, directly refer to related descriptions in any one of the method embodiments shown in FIG. 3 to FIG. 11. Details are not described herein again.

It should be noted that the transceiver unit may also be referred to as a transceiver module, a transceiver, a transceiver machine, a transceiver apparatus, or the like. The processing unit may also be referred to as a processor, a processing board, a processing module, a processing apparatus, or the like. Optionally, the transceiver unit is configured to perform a sending operation and a receiving operation on a terminal side or a network device side in the foregoing methods. A component that is in the transceiver unit and that is configured to implement a receiving function may be considered as a receiving unit, and a component that is in the transceiver unit and that is configured to implement a sending function may be considered as a sending unit. In other words, the transceiver unit includes the receiving unit and the sending unit.

It should be further noted that in a possible design, the transceiver unit and/or the processing unit may be implemented through a virtual module. For example, the processing unit may be implemented through a software functional unit or a virtual apparatus, and the transceiver unit may be implemented through a software function or a virtual apparatus. In another possible design, the processing unit or the transceiver unit may alternatively be implemented through a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation). The processing unit is an integrated processor, a microprocessor, or an integrated circuit.

In embodiments of this application, division into units is an example, and is merely a logical function division. In actual implementation, another division manner may be used. In addition, functional modules in the examples in embodiments of this application may be integrated into one processor, or each of the modules may exist alone physically, or two or more modules are integrated into one module. The integrated module may be implemented in the form of hardware, or may be implemented in the form of a software functional module.

In an example, FIG. 13 is a block diagram of a relay link establishment apparatus 1300 on a relay terminal side according to an embodiment of this application. As shown in FIG. 13, the relay link establishment apparatus 1300 includes a transceiver unit 1310 and a processing unit 1320.

In a possible design, the relay link establishment apparatus 1300 is configured to implement a function of the relay terminal in any one of the method embodiments shown in FIG. 3 to FIG. 11. For more detailed descriptions of the transceiver unit 1310 and the processing unit 1320, directly refer to related descriptions in any one of the method embodiments shown in FIG. 3 to FIG. 11. Details are not described herein again.

It should be noted that the transceiver unit may also be referred to as a transceiver module, a transceiver, a transceiver machine, a transceiver apparatus, or the like. The processing unit may also be referred to as a processor, a processing board, a processing module, a processing apparatus, or the like. Optionally, the transceiver unit is configured to perform a sending operation and a receiving operation on a terminal side or a network device side in the foregoing methods. A component that is in the transceiver unit and that is configured to implement a receiving function may be considered as a receiving unit, and a component that is in the transceiver unit and that is configured to implement a sending function may be considered as a sending unit. In other words, the transceiver unit includes the receiving unit and the sending unit.

It should be further noted that in a possible design, the transceiver unit and/or the processing unit may be implemented through a virtual module. For example, the processing unit may be implemented through a software functional unit or a virtual apparatus, and the transceiver unit may be implemented through a software function or a virtual apparatus. In another possible design, the processing unit or the transceiver unit may alternatively be implemented through a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation). The processing unit is an integrated processor, a microprocessor, or an integrated circuit.

In embodiments of this application, division into units is an example, and is merely a logical function division. In actual implementation, another division manner may be used. In addition, functional modules in the examples in embodiments of this application may be integrated into one processor, or each of the modules may exist alone physically, or two or more modules are integrated into one module. The integrated module may be implemented in the form of hardware, or may be implemented in the form of a software functional module.

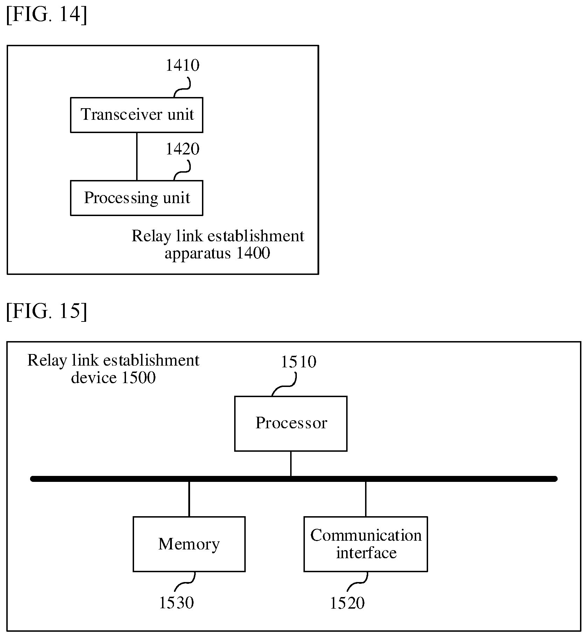

In an example, FIG. 14 is a block diagram of a relay link establishment apparatus 1400 on a second terminal side according to an embodiment of this application. As shown in FIG. 14, the relay link establishment apparatus 1400 includes a transceiver unit 1410 and a processing unit 1420.

In a possible design, the relay link establishment apparatus 1400 is configured to implement a function of the relay terminal in any one of the method embodiments shown in FIG. 3 to FIG. 11. For more detailed descriptions of the transceiver unit 1410 and the processing unit 1420, directly refer to related descriptions in any one of the method embodiments shown in FIG. 3 to FIG. 11. Details are not described herein again.

It should be noted that the transceiver unit may also be referred to as a transceiver module, a transceiver, a transceiver machine, a transceiver apparatus, or the like. The processing unit may also be referred to as a processor, a processing board, a processing module, a processing apparatus, or the like. Optionally, the transceiver unit is configured to perform a sending operation and a receiving operation on a terminal side or a network device side in the foregoing methods. A component that is in the transceiver unit and that is configured to implement a receiving function may be considered as a receiving unit, and a component that is in the transceiver unit and that is configured to implement a sending function may be considered as a sending unit. In other words, the transceiver unit includes the receiving unit and the sending unit.

It should be further noted that in a possible design, the transceiver unit and/or the processing unit may be implemented through a virtual module. For example, the processing unit may be implemented through a software functional unit or a virtual apparatus, and the transceiver unit may be implemented through a software function or a virtual apparatus. In another possible design, the processing unit or the transceiver unit may alternatively be implemented through a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation). The processing unit is an integrated processor, a microprocessor, or an integrated circuit.

In embodiments of this application, division into units is an example, and is merely a logical function division. In actual implementation, another division manner may be used. In addition, functional modules in the examples in embodiments of this application may be integrated into one processor, or each of the modules may exist alone physically, or two or more modules are integrated into one module. The integrated module may be implemented in the form of hardware, or may be implemented in the form of a software functional module.

FIG. 15 to FIG. 17 are block diagrams of possible relay link establishment devices according to embodiments of this application. These relay link establishment apparatuses may be configured to implement functions of the first terminal, the relay terminal, or the second terminal in the foregoing method embodiments, and therefore can also achieve beneficial effects of the foregoing method embodiments. In embodiments of this application, the relay link establishment device may be the first terminal, the relay terminal, or the second terminal in any one of the method embodiments shown in FIG. 3 to FIG. 11, may be a component (for example, a chip, a chip system, or a processor) configured in a terminal or a network device, or may be a logical module or software that can implement some or all functions of the terminal or the network device.

In an example, FIG. 15 is a block diagram of a relay link establishment device 1500 on a first terminal side according to an embodiment of this application. As shown in FIG. 15, the relay link establishment device 1500 includes a processor 1510. The processor 1510 may be configured to execute a computer program or instructions in a memory, to implement the steps performed by the first terminal in any one of the method embodiments shown in FIG. 3 to FIG. 11.

Optionally, the relay link establishment device 1500 further includes a communication interface 1520. The processor 1510 and the communication interface 1520 are coupled to each other. It may be understood that the communication interface 1520 may be a transceiver or an input/output interface.

Optionally, the relay link establishment device 1500 may further include the memory 1530, configured to store instructions executed by the processor 1510, store input data required by the processor 1510 to run the instructions, or store data generated after the processor 1510 runs the instructions.

When the relay link establishment device 1500 is configured to implement the method shown in any one of FIG. 3 to FIG. 11, the processor 1510 is configured to perform a function of the processing unit 1220, and the communication interface 1520 is configured to perform a function of the transceiver unit 1210. Whether the communication interface 1520 is configured to perform sending or receiving may be specifically determined based on whether the communication interface is configured to perform a sending action or a receiving action in the solution performed by the relay link establishment device 1500.

When the relay link establishment device 1500 is a chip used in a terminal, the chip implements a function of the terminal in the foregoing method embodiments. The chip of the terminal receives a signal from another module (for example, a radio frequency module or an antenna) in the terminal, where the signal may be sent by a network device to the terminal; or the chip of the terminal sends a signal to another module (for example, a radio frequency module or an antenna) in the terminal, where the signal may be sent by the terminal to a network device.

It may be understood that when the relay link establishment device 1500 is the first terminal, the communication interface 1520 may be a transceiver, and may specifically include a transmitter and a receiver. The transmitter is configured to send a signal, and the receiver is configured to receive a signal. When the relay link establishment device 1500 is a chip used in the terminal, the communication interface 1520 may be an input/output circuit, a bus, a module, a pin, or another type of communication interface. An input circuit in the input/output circuit may be configured for receiving, and an output interface may be configured for sending.

It should be understood that, in the relay link establishment device 1500 shown in FIG. 15, the processor 1510 may correspond to the processing unit 1220 in the foregoing relay link establishment apparatus 1200, and the communication interface 1520 may correspond to the transceiver unit 1210 in the foregoing relay link establishment apparatus 1200.

It should be further understood that the coupling in embodiments of this application is an indirect coupling or communication link between apparatuses, units, or modules; the coupling may be an electrical, mechanical, or another form; and the coupling is used for information exchange between apparatuses, units, or modules. The processor 1510 may cooperate with the memory 1530. A specific link medium between the processor 1510, the communication interface 1520, and the memory 1530 is not limited in embodiments of this application.

Optionally, the processor 1510, the communication interface 1520, and the memory 1530 are linked to each other through a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

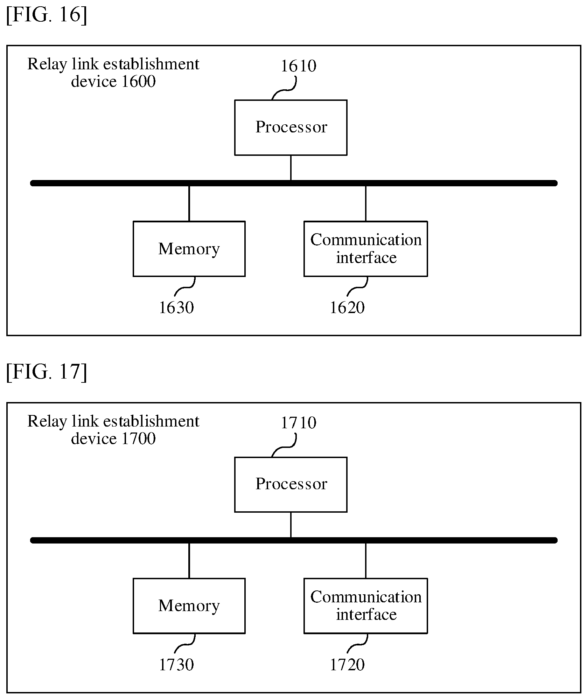

In an example, FIG. 16 is a block diagram of a relay link establishment device 1600 on a relay terminal side according to an embodiment of this application. As shown in FIG. 16, the relay link establishment device 1600 includes a processor 1610. The processor 1610 may be configured to execute a computer program or instructions in a memory, to implement the steps performed by the relay terminal in any one of the method embodiments shown in FIG. 3 to FIG. 11.

Optionally, the relay link establishment device 1600 further includes a communication interface 1620. The processor 1610 and the communication interface 1620 are coupled to each other. It may be understood that the communication interface 1620 may be a transceiver or an input/output interface.

Optionally, the relay link establishment device 1600 may further include the memory 1630, configured to store instructions executed by the processor 1610, store input data required by the processor 1610 to run the instructions, or store data generated after the processor 1610 runs the instructions.

When the relay link establishment device 1600 is configured to implement the method shown in any one of FIG. 3 to FIG. 11, the processor 1610 is configured to perform a function of the processing unit 1320, and the communication interface 1620 is configured to perform a function of the transceiver unit 1310. Whether the communication interface 1620 is configured to perform sending or receiving may be specifically determined based on whether the communication interface is configured to perform a sending action or a receiving action in the solution performed by the relay link establishment device 1600.

When the relay link establishment device 1600 is a chip used in a terminal, the chip implements a function of the terminal in the foregoing method embodiments. The chip of the terminal receives a signal from another module (for example, a radio frequency module or an antenna) in the terminal, where the signal may be sent by a network device to the terminal; or the chip of the terminal sends a signal to another module (for example, a radio frequency module or an antenna) in the terminal, where the signal may be sent by the terminal to a network device.

It may be understood that when the relay link establishment device 1600 is the relay terminal, the communication interface 1620 may be a transceiver, and may specifically include a transmitter and a receiver. The transmitter is configured to send a signal, and the receiver is configured to receive a signal. When the relay link establishment device 1600 is a chip used in the terminal, the communication interface 1620 may be an input/output circuit, a bus, a module, a pin, or another type of communication interface. An input circuit in the input/output circuit may be configured for receiving, and an output interface may be configured for sending.

It should be understood that, in the relay link establishment device 1600 shown in FIG. 16, the processor 1610 may correspond to the processing unit 1320 in the foregoing relay link establishment apparatus 1300, and the communication interface 1620 may correspond to the transceiver unit 1310 in the foregoing relay link establishment apparatus 1300.

It should be further understood that the coupling in embodiments of this application is an indirect coupling or communication link between apparatuses, units, or modules; may be an electrical, mechanical, or another form; and is used for information exchange between apparatuses, units, or modules. The processor 1610 may cooperate with the memory 1630. A specific link medium between the processor 1610, the communication interface 1620, and the memory 1630 is not limited in embodiments of this application.

Optionally, the processor 1610, the communication interface 1620, and the memory 1630 are linked to each other through a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

In an example, FIG. 17 is a block diagram of a relay link establishment device 1700 on a second terminal side according to an embodiment of this application. As shown in FIG. 17, the relay link establishment device 1700 includes a processor 1710. The processor 1710 may be configured to execute a computer program or instructions in a memory, to implement the steps performed by the second terminal in any one of the method embodiments shown in FIG. 3 to FIG. 11.

Optionally, the relay link establishment device 1700 further includes a communication interface 1720. The processor 1710 and the communication interface 1720 are coupled to each other. It may be understood that the communication interface 1720 may be a transceiver or an input/output interface.

Optionally, the relay link establishment device 1700 may further include a memory 1730, configured to store instructions executed by the processor 1710, store input data required by the processor 1710 to run the instructions, or store data generated after the processor 1710 runs the instructions.

When the relay link establishment device 1700 is configured to implement the method shown in any one of FIG. 3 to FIG. 11, the processor 1710 is configured to perform a function of the processing unit 1420, and the communication interface 1720 is configured to perform a function of the transceiver unit 1410. Whether the communication interface 1720 is configured to perform sending or receiving may be specifically determined based on whether the communication interface is configured to perform a sending action or a receiving action in the solution performed by the relay link establishment device 1700.

When the relay link establishment device 1700 is a chip used in a terminal, the chip implements a function of the terminal in the foregoing method embodiments. The chip of the terminal receives a signal from another module (for example, a radio frequency module or an antenna) in the terminal, where the signal may be sent by a network device to the terminal; or the chip of the terminal sends a signal to another module (for example, a radio frequency module or an antenna) in the terminal, where the signal may be sent by the terminal to a network device.

It may be understood that when the relay link establishment device 1700 is the second terminal, the communication interface 1720 may be a transceiver, and may specifically include a transmitter and a receiver. The transmitter is configured to send a signal, and the receiver is configured to receive a signal. When the relay link establishment device 1700 is a chip used in the terminal, the communication interface 1720 may be an input/output circuit, a bus, a module, a pin, or another type of communication interface. An input circuit in the input/output circuit may be configured for receiving, and an output interface may be configured for sending.

It should be understood that, in the relay link establishment device 1700 shown in FIG. 17, the processor 1710 may correspond to the processing unit 14210 in the foregoing relay link establishment apparatus 1400, and the communication interface 1720 may correspond to the transceiver unit 1410 in the foregoing relay link establishment apparatus 1400.

It should be further understood that the coupling in embodiments of this application is an indirect coupling or communication link between apparatuses, units, or modules; may be an electrical, mechanical, or another form; and is used for information exchange between apparatuses, units, or modules. The processor 1710 may cooperate with the memory 1730. A specific link medium between the processor 1710, the communication interface 1720, and the memory 1730 is not limited in embodiments of this application.

Optionally, the processor 1710, the communication interface 1720, and the memory 1730 are linked to each other through a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

It may be understood that the processor in embodiments of this application may be a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The memory in embodiments of this application may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAM may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

This application further provides a relay link establishment system. The relay link establishment system includes the foregoing first terminal, relay terminal, and second terminal.

This application further provides a computer program product. The computer program product includes a computer program (which may also be referred to as code or instructions). When the computer program runs, a computer is caused to perform the methods performed by the terminal or the methods performed by the network device in embodiments shown in FIG. 3 to FIG. 11.

This application further provides a computer-readable storage medium. The computer-readable storage medium stores a computer program (which may also be referred to as code or instructions). When the computer program runs, a computer is caused to perform the methods performed by the terminal or the methods performed by the network device in embodiments shown in FIG. 3 to FIG. 11.

Terms such as "unit" and "module" used in this specification may represent computerrelated entities, hardware, firmware, combinations of hardware and software, software, or software being executed.

A person of ordinary skill in the art may be aware that, in combination with illustrative logical blocks (illustrative logical blocks) described in embodiments disclosed in this specification and steps (steps) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication links may be implemented by using some interfaces. The indirect couplings or communication links between the apparatuses or units may be implemented in electrical, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

In the foregoing embodiments, all or some of the functions of the functional units may be implemented by using software, hardware, firmware, or any combination thereof. When software is used to implement the embodiments, all or a part of the software may be implemented in the form of a computer program product. The computer program product includes one or more computer instructions (programs). When the computer instructions (programs) are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD)), or a semiconductor medium (for example, a solid-state drive (solid-state drive, SSD)), or the like.

When functions are implemented in the form of a software functional unit and sold or used as an independent product, the functions may be stored in a computer-readable storage medium. Based on this understanding, the technical solutions of this application essentially, or the part contributing to the conventional technology, or some of the technical solutions may be implemented in the form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, for example, a USB flash drive, a portable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A relay link establishment method, applied to a first terminal and comprising:
receiving first information, wherein the first information comprises a discovery response message sent by each of a plurality of relay terminals, the discovery response message is a response message to a first discovery message, the discovery response message comprises first indication information and first discovery information, the first indication information indicates relay terminals through which the first discovery information passes, the first discovery information comprises a terminal identifier and a relay service code, and the first discovery message is used by the first terminal to discover a second terminal;
determining a first relay terminal based on the first information, wherein the first relay terminal is one of the plurality of relay terminals; and
sending a link message to the first relay terminal, wherein the link message comprises the terminal identifier and second indication information, and the second indication information is the first indication information in the discovery response message sent by the first relay terminal.

2. The method according to claim 1, wherein the determining the first relay terminal based on the first information comprises:
determining the first relay terminal based on the first indication information in the first information.

3. The method according to claim 1 or 2, wherein the discovery response message further comprises a time to live value; and/or the first information further comprises signal quality of the discovery response message, wherein the time to live value is a value of a time to live of the first discovery message when the first discovery message corresponding to the discovery response message is responded to.

4. The method according to claim 3, wherein the determining the first relay terminal based on the first information comprises:
determining the first relay terminal based on the first indication information and one or more of the time to live value in the first information, the signal quality of the discovery response message, and preset third indication information, wherein the preset third indication information indicates a relay terminal that the first terminal expects to select.

5. The method according to any one of claims 1 to 4, wherein the method further comprises:
broadcasting the first discovery message, wherein the first discovery message comprises the first discovery information, first hop count information, and the first indication information, the first hop count information is used to limit a maximum number of hops for transmission of the first discovery information, and the first indication information indicates the relay terminals through which the first discovery information passes.

6. The method according to claim 5, wherein the method further comprises:
receiving a link response message sent by the first relay terminal, wherein the link response message is a response message to the link message.

7. The method according to any one of claims 1 to 6, wherein the terminal identifier comprises an identifier of the first terminal and an identifier of the second terminal, or the terminal identifier comprises an identifier of the first terminal.

8. A relay link establishment method, applied to a first terminal and comprising:
receiving second information, wherein the second information comprises a second discovery message broadcast by each of a plurality of relay terminals, the second discovery message is used by the first terminal to discover a second terminal, the second discovery message is from the relay terminal, the second discovery message comprises fourth indication information and second discovery information, the fourth indication information indicates relay terminals through which the second discovery information passes, the second discovery information comprises a terminal identifier and a relay service code, and the second discovery information is from the second terminal;
determining a first relay terminal based on the second information, wherein the first relay terminal is one of the plurality of relay terminals; and
sending a link message to the first relay terminal, wherein the link message comprises the terminal identifier and fifth indication information, and the fifth indication information is the fourth indication information in the second discovery message sent by the first relay terminal.

9. The method according to claim 8, wherein the determining the first relay terminal based on the second information comprises:
determining the first relay terminal based on the fourth indication information in the second information.

10. The method according to claim 8 or 9, wherein the second discovery message further comprises second hop count information; and/or the second information further comprises signal quality of the second discovery message, wherein the second hop count information is used to limit a maximum number of hops for transmission of the second discovery information.

11. The method according to claim 10, wherein the determining the first relay terminal based on the second information comprises:
determining the first relay terminal based on the fourth indication information and one or more of the second hop count information in the second information, the signal quality of the second discovery message, and preset third indication information, wherein the preset third indication information indicates a relay terminal that the first terminal expects to select.

12. The method according to claim 8, wherein the method further comprises:
receiving a link response message sent by the first relay terminal, wherein the link response message is a response message to the link message.

13. The method according to any one of claims 8 to 12, wherein the terminal identifier comprises an identifier of the first terminal and an identifier of the second terminal, or the terminal identifier comprises an identifier of the first terminal.

14. A relay link establishment method, applied to a relay terminal and comprising:
receiving a link message sent by a first terminal or another relay terminal, wherein the link message comprises a terminal identifier and second indication information, the second indication information is first indication information in a discovery response message sent by a first relay terminal, the first relay terminal is a relay terminal determined based on first information, and the first information is information that is received by the first terminal and that comprises a discovery response message sent by each of a plurality of relay terminals; and
determining, based on the second indication information, another relay terminal or a second terminal to which the link message is to be sent, and sending the link message to the another relay terminal or the second terminal.

15. The method according to claim 14, wherein the determining, based on the second indication information, the another relay terminal or the second terminal to which the link message is to be sent, and sending the link message to the another relay terminal or the second terminal comprises:
if determining, based on the second indication information, that the link message is to be sent to the another relay terminal, unicasting the link message to the another relay terminal; and
if determining, based on the second indication information, that the link message is to be sent to the second terminal, sending the link message to the second terminal based on a type of the second terminal, wherein the type of the second terminal comprises a relay device and a terminal device.

16. The method according to claim 15, wherein the sending the link message to the second terminal based on the type of the second terminal comprises:
if the type of the second terminal is the relay device, unicasting the link message to the second terminal; and
if the type of the second terminal is the terminal device, broadcasting the link message.

17. The method according to any one of claims 14 to 16, wherein the method further comprises:
receiving a discovery response message sent by the second terminal or another relay terminal, wherein the discovery response message is a response message to a first discovery message, the discovery response message comprises first indication information and first discovery information, the first indication information indicates relay terminals through which the first discovery information passes, the first discovery information comprises the terminal identifier and a relay service code, and the first discovery message is used by the first terminal to discover the second terminal; and
sending the discovery response message to corresponding another relay terminal or the first terminal based on a layer-2 address association relationship.

18. The method according to any one of claims 14 to 16, wherein the method further comprises:
receiving third information, wherein the third information comprises a first discovery message broadcast by the first terminal or another relay terminal, the first discovery message comprises first discovery information, first hop count information, and first indication information, the first hop count information is used to limit a maximum number of hops for transmission of the first discovery information, and the first indication information indicates relay terminals through which the first discovery information passes; and
determining and broadcasting a to-be-sent first discovery message based on the third information.

19. The method according to claim 18, wherein the third information further comprises signal quality of the first discovery message; and the determining and broadcasting the to-be-sent first discovery message based on the third information comprises:
determining and broadcasting the to-be-sent first discovery message based on the first indication information and one or more of the first hop count information and the signal quality of the first discovery message.

20. The method according to any one of claims 14 to 16, wherein the method further comprises:
receiving a link response message sent by the second terminal or another relay terminal, wherein the link response message is a response message to the link message, and the link response message comprises the terminal identifier and an identifier of the relay terminal sending the link response message; and
sending the link response message to the first terminal or the another relay terminal based on the terminal identifier comprised in the link response message and an identifier of the relay terminal receiving the link response message.

21. The method according to any one of claims 14 to 20, wherein the terminal identifier comprises an identifier of the first terminal and an identifier of the second terminal, or the terminal identifier comprises an identifier of the first terminal.

22. A relay link establishment method, applied to a relay terminal and comprising:
receiving a link message sent by a first terminal or another relay terminal, wherein the link message comprises a terminal identifier and fifth indication information, and the fifth indication information is fourth indication information in a second discovery message sent by a first relay terminal; and
determining, based on the fifth indication information, another relay terminal or a second terminal to which the link message is to be sent, and sending the link message to the another relay terminal or the second terminal.

23. The method according to claim 22, wherein the determining, based on the fifth indication information, the another relay terminal or the second terminal to which the link message is to be sent, and sending the link message to the another relay terminal or the second terminal comprises:
if determining, based on the fifth indication information, that the link message is to be sent to the another relay terminal, unicasting the link message to the another relay terminal; and
if determining, based on the fifth indication information, that the link message is to be sent to the second terminal, sending the link message to the second terminal based on a type of the second terminal, wherein the type of the second terminal comprises a relay device and a terminal device.

24. The method according to claim 23, wherein the sending the link message to the second terminal based on the type of the second terminal comprises:
if the type of the second terminal is the relay device, unicasting the link message to the second terminal; and
if the type of the second terminal is the terminal device, broadcasting the link message.

25. The method according to any one of claims 22 to 24, wherein the method further comprises:
generating and broadcasting a second discovery message, wherein the second discovery message is used by the first terminal to discover the second terminal, the second discovery message comprises fourth indication information and second discovery information, the fourth indication information indicates relay terminals through which the second discovery information passes, the second discovery information comprises the terminal identifier and a relay service code, and the second discovery information is from the second terminal.

26. The method according to claim 25, wherein the method further comprises:
receiving fourth information, wherein the fourth information comprises a second discovery message broadcast by each of a plurality of other relay terminals; and
determining and broadcasting a to-be-sent second discovery message based on the fourth information.

27. The method according to claim 26, wherein the determining and broadcasting the to-be-sent second discovery message based on the fourth information comprises:
determining and broadcasting the to-be-sent second discovery message based on fourth indication information.

28. The method according to claim 26 or 27, wherein the second discovery message further comprises second hop count information; and/or the fourth information further comprises signal quality of the second discovery message, wherein the second hop count information is used to limit a maximum number of hops for transmission of the second discovery information; and
the determining and broadcasting the to-be-sent second discovery message based on the fourth information comprises:
determining and broadcasting the to-be-sent second discovery message based on the fourth indication information and one or more of the second hop count information in the fourth information and the signal quality of the second discovery message.

29. The method according to any one of claims 22 to 24, wherein the method further comprises:
receiving a link response message sent by the second terminal or another relay terminal, wherein the link response message is a response message to the link message, and the link response message comprises the terminal identifier and an identifier of the relay terminal sending the link response message; and
sending the link response message to the first terminal or another relay terminal based on the terminal identifier comprised in the link response message and the identifier of the relay terminal sending the link response message.

30. The method according to any one of claims 22 to 29, wherein the terminal identifier comprises an identifier of the first terminal and an identifier of the second terminal, or the terminal identifier comprises an identifier of the first terminal.

31. A relay link establishment method, applied to a second terminal and comprising: receiving a link message sent by a relay terminal, wherein the link message comprises a terminal identifier and second indication information, the second indication information is first indication information in a discovery response message sent by a first relay terminal, the first relay terminal is a relay terminal determined based on first information, and the first information is information that is received by a first terminal and that comprises a discovery response message sent by each of a plurality of relay terminals;
generating, based on the terminal identifier and the second indication information that are comprised in the link message, a link response message corresponding to the link message, and determining the relay terminal corresponding to the link response message; and
sending the link response message to the relay terminal corresponding to the link response message.

32. The method according to claim 31, wherein the link response message comprises the terminal identifier, an identifier of the second terminal or a relay terminal that sends the link response message, and an identifier of a relay terminal or the first terminal that receives the link response message.

33. The method according to claim 31 or 32, wherein the method further comprises:
receiving fifth information, wherein the fifth information comprises a first discovery message broadcast by each of a plurality of relay terminals, the first discovery message comprises first discovery information, first hop count information, and first indication information, the first hop count information is used to limit a maximum number of hops for transmission of the first discovery information, and the first indication information indicates relay terminals through which the first discovery information passes;
determining, based on the fifth information, a first discovery message to be responded to;
generating a discovery response message to the first discovery message to be responded to, wherein the discovery response message comprises first indication information and the first discovery information, the first indication information indicates relay terminals through which the first discovery information passes, and the first discovery information comprises the terminal identifier and a relay service code; and
sending the discovery response message to a corresponding relay terminal based on a layer-2 address association relationship.

34. The method according to claim 33, wherein the determining, based on the fifth information, the first discovery message to be responded to comprises:
determining, based on the first hop count information and/or the first indication information, the first discovery message to be responded to.

35. The method according to claim 33 or 34, wherein the fifth information further comprises signal quality of the first discovery message.

36. The method according to claim 35, wherein the determining, based on the fifth information, the first discovery message to be responded to comprises:
determining, based on the first indication information and one or more of the first hop count information, the signal quality of the first discovery message, and preset sixth indication information, the first discovery message to be responded to,
wherein the preset sixth indication information indicates a relay terminal that the second terminal expects to select.

37. The method according to any one of claims 31 to 36, wherein the terminal identifier comprises the identifier of the first terminal and the identifier of the second terminal, or the terminal identifier comprises the identifier of the first terminal.

38. A relay link establishment method, applied to a second terminal and comprising:
receiving a link message sent by a relay terminal, wherein the link message comprises a terminal identifier and fifth indication information, the fifth indication information is fourth indication information in a second discovery message sent by a first relay terminal, the first relay terminal is a relay terminal determined based on second information, and the second information is information that is received by a first terminal and that comprises a second discovery message sent by each of a plurality of relay terminals;
generating, based on the terminal identifier and the fifth indication information that are comprised in the link message, a link response message corresponding to the link message, and determining the relay terminal corresponding to the link response message; and
sending the link response message to the relay terminal corresponding to the link response message.

39. The method according to claim 38, wherein the link response message comprises the terminal identifier, an identifier of the second terminal or a relay terminal that sends the link response message, and an identifier of a relay terminal or the first terminal that receives the link response message.

40. The method according to claim 38 or 39, wherein the terminal identifier comprises the identifier of the first terminal and the identifier of the second terminal, or the terminal identifier comprises the identifier of the first terminal.

41. A relay link establishment device, comprising a processor, a memory, and a communication interface, wherein
the memory is configured to store computer-executable program code; the program code comprises instructions; and when the processor executes the instructions, the instructions cause the relay link establishment device to perform the method according to any one of claims 1 to 7, the method according to any one of claims 8 to 13, the method according to any one of claims 14 to 21, the method according to any one of claims 22 to 30, the method according to any one of claims 31 to 37, or the method according to any one of claims 38 to 40.
